**Europäisches Patentamt**

(19) **European Patent Office**

**Office européen des brevets**

(11) Veröffentlichungsnummer : **0 093 193**
**B1**

(12) **EUROPÄISCHE PATENTSCHRIFT**

(45) Veröffentlichungstag der Patentschrift :
**28.05.86**

(21) Anmeldenummer : **82107986.0**

(22) Anmeldetag : **31.08.82**

(51) Int. Cl.⁴ : **A 01 B 49/00**, A 01 B 51/00,
A 01 B 13/08, A 01 B 63/24

(54) Landwirtschaftlicher Geräteverbund.

(30) Priorität : 28.04.82 DEU 8212168
12.05.82 DEU 8213692
25.06.82 DEU 8218233

(43) Veröffentlichungstag der Anmeldung :
09.11.83 Patentblatt 83/45

(45) Bekanntmachung des Hinweises auf die Patenterteilung : 28.05.86 Patentblatt 86/22

(84) Benannte Vertragsstaaten :
DE FR GB IT

(56) Entgegenhaltungen :
EP-A- 0 027 924
EP-A- 0 033 950
EP-A- 0 048 907
DE-A- 314 883
FR-A- 2 250 463
FR-A- 2 348 637
FR-A- 2 389 310
FR-A- 2 418 614
FR-A- 2 499 814
FR-A- 2 499 817
US-A- 4 248 310

(73) Patentinhaber : Maschinenfabrik Rau GmbH
Johannes-Rau-Strasse
D-7315 Weilheim (DE)

(72) Erfinder : Rau, Willy
Johannes Rau Strasse
D-7315 Weilheim-Teck (DE)
Erfinder : Taus, Christian
Galgenberg 19
D-7312 Kirchheim-Teck (DE)

(74) Vertreter : Rotermund, Hanns-Jörg, Dipl.-Phys. et al
MANITZ, FINSTERWALD & ROTERMUND Seelbergstrasse 23/25
D-7000 Stuttgart 50 (DE)

**Beschreibung**

Die Erfindung betrifft einen landwirtschaftlichen Geräteverbund zur Ankopplung, insbesondere mittels Dreipunktgestänges, an ein Zug- bzw. Schlepperfahrzeug, insbesondere zur Bodenbearbeitung, mit vorauslaufendem, gegebenenfalls kombiniertem Gerät und nachlaufender Geräteanordnung bzw. -kombination, die mittels eines Hubwerkes mit Unter- und Obergestänge, welches zwischen einem Trägerbock über dem vorauslaufenden Gerät und einem mit der nachlaufenden Geräteanordnung bzw. -kombination koppelbaren Trägerteil nach Art eines Lenkergeviers — in Seitenansicht gesehen vorzugsweise parallelogrammartig — angeordnet ist, aus einer hinter das vorauslaufende Gerät abgesenkten Arbeitslage in eine über das vorauslaufende Gerät angehobene Transportstellung anhebbar ist.

Aus der AT-B-314 883 ist die Anordnung eines entsprechenden Hubwerkes an einem Kombinationsgerät bekannt. Durch das Hubwerk soll insbesondere die Gesamtlänge des Kombinationsgerätes beim Transport verkürzt werden, um die auf das Zug- bzw. Schlepperfahrzeug wirkenden, die Vorderachse entlastenden Hebelkräfte zu vermindern, wenn das Kombinationsgerät mittels des Dreipunktgestänges in angehobener Lage ohne Bodenberührung transportiert wird.

Jedoch muß bei diesem bekannten Kombinationsgerät die nachlaufende Geräteanordnung bzw. -kombination vergleichsweise leicht sein, da andernfalls beim Transport unerwünscht starke Verwindungen des Hubwerkes auftreten würden; Hinzu kommt, daß der Trägerbock auf dem vorauslaufenden Gerät abgestützt ist, welches ebenfalls nur begrenzt belastbar ist.

Deshalb ist es Aufgabe der Erfindung, einen Geräteverbund der eingangs genannten Art zu schaffen, welcher trotz des zwischen das vorauslaufende Gerät und die nachlaufende Geräteanordnung bzw. -kombination geschalteten Hubwerkes eine auch für schweres Gerät ausreichende Stabilität besitzt und ohne weiteres für unterschiedliche Gerätekombinationen umgerüstet bzw. nachgerüstet werden kann.

Diese Aufgabe wird dadurch gelöst, daß als Trägerbock ein das vorauslaufende Gerät austauschbar tragender, mit dem Zug- bzw. Schleppfahrzeug, vorzugsweise mittels des Dreipunktgestänges, koppelbarer bockartiger Rahmen mit mehreren, vorzugsweise vorgefertigten, für unterschiedliche Geräteeinheiten einschließlich des vorauslaufenden Gerätes nutzbaren Anschlußpunkten angeordnet ist, an denen unter anderem sowohl das an einem oberen Teil des bockartigen Rahmens angelenkte Obergestänge als auch das an einem unteren Teil des bockartigen Rahmens angelenkte Untergestänge angeordnet sind, welches aus zwei Länglenkereinheiten besteht, die mittels Querverbindung, welche mit Abstand von den rahmenseitigen Enden der Längslenkereinheiten und vorzugsweise — zumindest im Mittelbereich des Geräteverbundes — oberhalb einer die Längslenkereinheiten enthaltenden Ebene angeordnet ist, zu einer verwindungssteifen Hubschwingeneinheit zusammengefaßt sind.

Erfindungsgemäß ist also am Dreipunktgestänge ein sehr stabil ausführbarer Rahmenbock angeordnet, der sowohl das austauschbare vorauslaufende Gerät als auch mittels des Hubwerkes, welches durch Anordnung der Hubschwinge außerordentlich verwindungssteif ist, die nachlaufende Geräteanordnung bzw. -kombination trägt, deren Einzelgeräte ebenfalls ausgetauscht werden können. Die Geräteeinheiten des vorauslaufenden Gerätes haben keinerlei tragende Funktion, da der Zusammenhalt des Geräteverbundes ausschließlich durch den bockförmigen Rahmen sowie das Hubwerk gewährleistet wird. Bei der Konstruktion der Einzelgeräte braucht somit ausschließlich die beim Arbeitseinsatz auftretende Belastung berücksichtigt zu werden, zusätzliche Belastungen durch weitere Einzelgeräte des Geräteverbundes treten nicht auf, diese werden vielmehr von dem bockartigen Rahmen aufgenommen.

Da am bockartigen Rahmen eine Vielzahl von Anschlußpunkten anbringbar bzw. vorgefertigt sind, läßt sich der erfindungsgemäße Geräteverbund jederzeit umrüsten. Außerdem läßt sich ein den jeweiligen Gegebenheiten optimal angepaßter Geräteverbund aus standardisierten Teilen zusammenstellen, so daß erhebliche Kosten gespart werden können.

Die Hubschwingeneinheit kann in Draufsicht H- oder X-förmig mit bezüglich der Längserstreckung außermittig-tragteilseitig angeordneter Querverstrebung bzw. Querverbindung ausgebildet sein, die einerseits eine hohe Steifigkeit der Hubschwingeneinheit gewährleistet und andererseits mit dem Obergestänge als Anschlag zur Begrenzung der Transportstellung zusammenwirken kann.

Durch die zum Tragteil hin verlagerte Querverbindung bzw. -verstrebung wird innerhalb des von der Hubschwingeneinheit hinter dem bockförmigen Rahmen umgrenzten Bereiches Platz für Abstützgestänge od.dgl. geschaffen, welches gegebenenfalls zur Anordnung einer zwischen das vorauslaufende Gerät und die nachlaufende Geräteanordnung bzw. -kombination geschalteten Geräteeinheit am bockartigen Rahmen, wiederum unter Nutzung der vorgefertigten Anschlußpunkte, dient. Aufgrund der vorzugsweise vorgesehenen erhöhten Anordnung der Querverbindung bzw. -verstrebung ist hinreichend Freiraum gegeben, um eine Zapf- oder Gelenkwelle anordnen zu können, mit der gegebenenfalls ein Teil der nachlaufenden Geräteanordnung bzw. -kombination antreibbar ist.

Zweckmäßigerweise läßt sich der Hubbereich des Hubwerkes bei angekoppelter zapfwellen- bzw. gelenkwellengetriebener Geräteanordnung bzw. -kombination und montierter Gelenk- bzw.

Zapfwelle entsprechend deren zulässigem Knickwinkel auf einen Bereich zwischen der Arbeitslage der Geräteanordnung bzw. -kombination und einer für Lenkmanöver nutzbaren Aushebelage beschränken, in der die noch hinter dem vorauslaufenden Gerät befindlichen Geräteanordnung bzw. -kombination keine Bodenberührung hat. Zur Begrenzung der Aushebelage ist beispielsweise eine Kette geeignet, die einerseits an einem rahmenfesten Punkt und andererseits mit Abstand von diesem Punkt in Längsrichtung des Geräteverbundes im Bereich der hinteren, tragteilseitigen Schwenkachse des Obergestänges einhängbar bzw. festlegbar ist. Zum Transport des Gerätes, bei dem das Hubwerk die nachlaufende Geräteanordnung bzw. -kombination über dem vorauslaufenden Gerät hält, werden die Kette sowie die Gelenk- bzw. Zapfwelle ausgehängt bzw. aufgetrennt.

Zum Antrieb des Hubwerkes dient zweckmäßigerweise ein Kolben-Zylinder-Aggregat, welches mittels einer auf dem Zug- bzw. Schlepperfahrzeug vorhandenen hydraulischen oder gegebenenfalls auch pneumatischen Druckquelle antreibbar ist. Das Kolben-Zylinder-Aggregat ist vorzugsweise im wesentlichen oberhalb des Obergestänges — in der der Arbeitslage zugeordneten Stellung des Hubwerkes — an einem oberhalb der rahmenseitigen Schwenkachse des Obergestänges angeordneten Anschlußpunkt bzw. an entsprechend nebeneinander angeordneten Anschlußpunkten sowie am Obergestänge gelenkig angeordnet, wobei durch eine Langlochanordnung am rahmenseitigen Gelenk bzw., vorzugsweise, am obergestängeseitigen Gelenk ein Höhenspiel zugelassen wird. Bei dieser Anordnung bleibt einerseits der Raum zwischen den Längslenkereinheiten der Hubschwingeneinheit ungestört, andererseits bewegen sich beim Anheben des Hubwerkes in die Transportstellung keinerlei Elemente in den Bereich des Zug- bzw. Schlepperfahrzeuges. Da das Hubwerk ein Höhenspiel zuläßt, kann die nachlaufende Geräteanordnung bzw. -kombination auch bei der Bodenbearbeitung in welligem Gelände praktisch spielfrei am Tragteil des Hubwerkes angeordnet werden. In diesem Falle gewährleistet die hohe Stabilität des bockartigen Rahmens sowie des verwindungssteifen Hubwerkes, daß die Querachse der nachlaufenden Geräteanordnung bzw. -kombination dauernd praktisch parallel zur Querachse des Zug- bzw. Schlepperfahrzeuges ausgerichtet bleibt.

Um die Parallelität der Querachsen des vorauslaufenden Gerätes sowie der nachlaufenden Geräteanordnung zu gewährleisten, ist die Anordnung eines von der Hubschwinge sowie dem Obergestänge geführten Tragteiles zwekmäßig, welches mit Abstand voneinander in Gerätequerrichtung nach oben geöffnete Hakenelemente aufweist, deren Öffnungen — in Seitenansicht gesehen — mittels pendelartiger, durch Feder- oder vorzugsweise Schwerkraft in Schließrichtung beaufschlagter Riegelglieder sperrbar ist, welche beim Einhängen der Geräteanordnung bzw. -kombination von deren mit den Hakenelementen zusammenwirkenden Anschlußelementen ausgelenkt werden und die letzteren praktisch spielfrei sichern.

Die Transportstellung des Hubwerkes ist vorzugsweise als Übertotpunktstellung ausgelegt, in der das Hubwerk unter dem Einfluß der Schwerkraft gegen einen Anschlag gedrängt wird. Zusätzlich kann eine Sicherheitsklinke od.dgl. angeordnet sein, um die Transportstellung auch gegen Erschütterungen bei der Fahrt sichern zu können.

Um den Schwerpunkt der am Hubwerk angeordneten nachlaufenden Geräteanordnung in Transportstellung möglichst weit nach vorne verlagern und dadurch eine zu starke Entlastung der Vorderräder des Zug- bzw. Schlepperfahrzeuges verhindern zu können, ist es erwünscht, den bockartigen Rahmen sowie das vorauslaufende Gerät mit möglichst geringer Längserstreckung anzuordnen. Im übrigen wird die Manövrierfähigkeit des Zug- bzw. Schlepperfahrzeuges auch im Arbeitseinsatz durch eine kurze Bauweise des angekoppelten Geräteverbundes verbessert. Dies gilt auch für den Fall, daß von der Anordnung eines Hubwerkes sowie einer nachlaufenden Geräteanordnung bzw. -kombination abgesehen wird. Gegebenenfalls kann der bockartige Rahmen, vor allem wenn kein Hubwerk u.dgl. vorhanden ist, durch einen Vorschaltrahmen vergrößert werden.

Im Hinblick auf eine möglichst kurze Bauweise sowie eine optimale Vorbereitung des Bodens für die Arbeit der gegebenenfalls am Hubwerk angeordneten Gerätekombination od.dgl. ist es vorteilhaft, wenn in Draufsicht dicht hinter, vorzugsweise unmittelbar hinter den Anschlußpunkten des bockartigen Rahmens für das Anschluß- bzw. Dreipunktgestänge zur Ankopplung an das Zug- bzw. Schlepperfahrzeug ein zapfwellengetriebenes Bodenbearbeitungsgerät — vorzugsweise mit Zinkenrotor, welcher in die Fahrt des Gerätes unterstützender Laufrichtung umläuft — angeordnet ist und wenn unmittelbar vor dem zapfwellengetriebenen Bodenbearbeitungsgerät im Bereich der unteren seitlichen Anschlußpunkte des bockartigen Rahmens und/oder zu den Geräteaußenseiten hin versetzt den Boden im wesentlichen horizontal abschälende Scharwerkzeuge derart angeordnet sind, daß die abgeschälte Erde in noch angehobenem Zustand zu den Werkzeugen des zapfwellengetriebenen Gerätes gelangt, so daß das letztere besonders wirksam arbeiten kann, indem die abgeschälten Bodenschichten besonders intensiv vermischt bzw. gelockert werden.

Zur Anordnung der Scharwerkzeuge können Halterungen dienen, die am bockartigen Rahmen im Bereich der seitlichen unteren Anschlußpunkte des Anschluß- bzw. Dreipunktgestänges und/oder seitlich außerhalb des bockartigen Rahmens an vorderen Rahmengliedern des zapfwellengetriebenen Bodenbearbeitungsgerätes und/oder — vorzugsweise — an seitlichen Auslegern des bockartigen Rahmens angeordnet sind,

welche zweckmäßigerweise zwischen ihren einander zugewandten, mit dem bockartigen Rahmen verbundenen Enden für den Durchtritt der Zapfwelle einen dem Querschnitt des bockartigen Rahmens in Vorderansicht etwa entsprechenden Freiraum offenlassen.

Die Scharwerkzeuge lassen sich durch Spindel- oder Teleskopaggregate, welche vorzugsweise an den Haltestielen der Werkzeuge — auch nachträglich — anbringbar sind, in besonders einfacher Weise auf eine gewünschte Höhenstellung relativ zum zapfwellengetriebenen Gerät bringen, welches aus Stabilitätsgründen sowie zur konstruktiven Vereinfachung fest am bockartigen Rahmen angeordnet ist.

Bevorzugt sind die Scharwerkzeuge als in Draufsicht gänsefußartige Messer ausgebildet. Um die Einsatzfähigkeit zu verbessern sowie die Herstellung zu erleichtern, ist es zweckmäßig, wenn am unteren Ende des Haltestieles lediglich ein schmaler Bodenmeißel unter einem Anstellwinkel in Fahrtrichtung nach vorn unten fest angeordnet ist, während V-förmige Schäl- bzw. Gänsefußmesser lösbar und höhenverstellbar am Haltestiel angeordnet sind, beispielsweise mittels einer auf dem Haltestiel verschiebbar geführten Hülse, welche am Haltestiel mittels Klemmschrauben verspannbar ist, die auf einem entgegen der Fahrtrichtung weisenden Bereich der Hülse in einer oder mehreren dort angebrachten Gewindebohrungen bzw. -buchsen angeordnet sind.

Aufgrund der erfindungsgemäßen Anordnung können die Haltestiele mit den daran angeordneten, relativ geringe Abmessungen aufweisenden Bodenmeißeln getrennt von den relativ großen Schälmessern kostengünstig hergestellt und gelagert werden. Außerdem lassen sich gegebenenfalls Schälmesser unterschiedlicher Abmessungen und unterschiedlicher Ausbildungen mit verschiedenen Bodenmeißeln kombinieren.

Ein besonderer Vorteil der erfindungsgemäßen Anordnung besteht darin, daß der Bodenmeißel gegebenenfalls in größerer Tiefe als die Schälmesser arbeiten kann, derart, daß der gare Boden mittels der Schälmesser angehoben und gelockert wird, während der Bodenmeißel den darunter befindlichen Untergrund zur Dränage od.dgl. in größerer Tiefe streifenförmig aufreißt.

Bei besonders leichten Böden können die Schälmesser auch doppelt, gegebenenfalls sogar mehrfach übereinander angeordnet werden.

Auf der Oberseite des Bodenmeißels kann vor dem Haltestiel ein messerartiges, in Fahrtrichtung gesehen vertikales Abweiserteil derart angeordnet sein, daß zwischen dem Haltestiel und dem Abweiserteil ein nach oben offener Abstandsraum zur Aufnahme der von den V-förmig angeordneten Schälmessern gebildeten Spitze vorliegt. Das Abweiserteil verhindert eine Verstopfung des Werkzeuges durch langsträhniges Gut od. dgl. Diese Gefahr würde ohne Anordnung des Abweiserteiles vor allem dann bestehen, wenn die Schälmesser mit mäßigem Abstand oberhalb des Bodenmeißels angeordnet werden. Das Abweiserteil zerschneidet jedoch das oberhalb des Bodenmeißels im Erdreich befindliche langsträhnige Gut u. dgl., so daß die Verstopfungsgefahr beseitigt wird.

Bei Werkzeugen für leichtere Böden ist vorgesehen, daß sich der Abstandsraum bis auf die Oberseite des Bodenmeißels erstreckt und die Schälmesser somit gegebenenfalls in gleicher Ebene mit dem Bodenmeißel angeordnet werden können. Für schwere Böden ist eine Anordnung vorzuziehen, bei der das Abweiserteil sowohl auf der Oberseite des Bodenmeißels sowie an einem an den Meißel anschließenden Bereich des Haltestieles befestigt, insbesondere angeschweißt ist. Hier endet der Abstandsraum also in einer gewissen Entfernung oberhalb des Meißels. Damit müssen die Schälmesser jeweils mit einem Mindestabstand oberhalb des Meißels arbeiten, wobei die Tiefeneinstellung des Werkzeuges in der Regel so vorgenommen wird, daß die Schälmesser noch im garen Boden arbeiten, während der Bodenmeißel den darunter befindlichen Untergrund lockert.

Gegebenenfalls kann anstelle der Scharwerkzeuge eine Planierschiene angeordnet werden, insbesondere wenn der Geräteverbund zur Bearbeitung bereits gepflügter Flächen — etwa im Frühjahr — dient.

Weitere bevorzugte Merkmale der Erfindung werden anhand der Zeichnung erläutert, in der bevorzugte Ausführungsformen dargestellt sind. Dabei zeigen

Figur 1 eine Seitenansicht eines erfindungsgemäßen Geräteverbundes mit zapfwellengetriebenem Zinkenrotor sowie dahinter angeordneter Krümlerwalze und einer gelenkwellengetriebenen Drillvorrichtung als nachlaufende Geräteanordnung in Arbeitslage,

Figur 2 eine Ansicht der Hubvorrichtung gemäß dem Pfeil II in Fig. 1,

Figur 3 den in Fig. 1 dargestellten Geräteverbund, jedoch mit aus ihrer Arbeitslage ausgehobener — etwa für Lenkmanöver — nachlaufender Geräteanordnung,

Figur 4 eine Draufsicht auf den in den Fig. 1 und 3 dargestellten Geräteverbund, jedoch bei abgenommener, nachlaufender Geräteanordnung,

Figur 5 bis 10 Geräteverbunde mit unterschiedlichen kombinierten Einzelgeräten,

Figur 11 und 12 die unterschiedlichen Belastungen des Zug- bzw. Schlepperfahrzeuges bei unterschiedlichen Lagen der nachlaufenden Geräteanordnung bzw. -kombination,

Figur 13 und 14 eine Seitenansicht sowie eine Draufsicht auf einen Geräteverbund ohne Hubwerk und nachlaufendes Gerät, jedoch mit Vorschaltrahmen vor dem bockartigen Rahmen und im Verbindungsbereich der beiden Rahmen angeordneten grubberartigen Werkzeugen,

Figur 15 und 16 eine besondere Ankopplung der nachlaufenden Geräteanordnung am Tragteil der Hubvorrichtung,

Figur 17 bis 19 eine Seitenansicht, eine Vorderansicht sowie eine Draufsicht eines Geräteverbundes mit unmittelbar vor einem Zinkenrotor angeordneten Scharwerkzeugen, die das abgeschälte Erdreich in noch angehobenem Zustand in den Zinkenrotor werfen,

Figur 20 eine der Fig. 19 entsprechende Draufsicht einer abgewandelten Ausführungsform,

Figur 21 eine Achsansicht einer Zinkengruppe des Zinkenrotors,

Figur 22 die Lage der Einstichpunkte der Zinken des Zinkenrotors bei Abrollen desselben auf einer Ebene,

Figur 23 bis 26 Vorrichtungen zur schnellen Höheneinstellung der Scharwerkzeuge mittels Verstellspindeln bzw. Teleskopaggregate und

Figur 28 bis 30 Seitenansichten sowie eine Draufsicht eines erfindungsgemäßen Scharwerkzeuges.

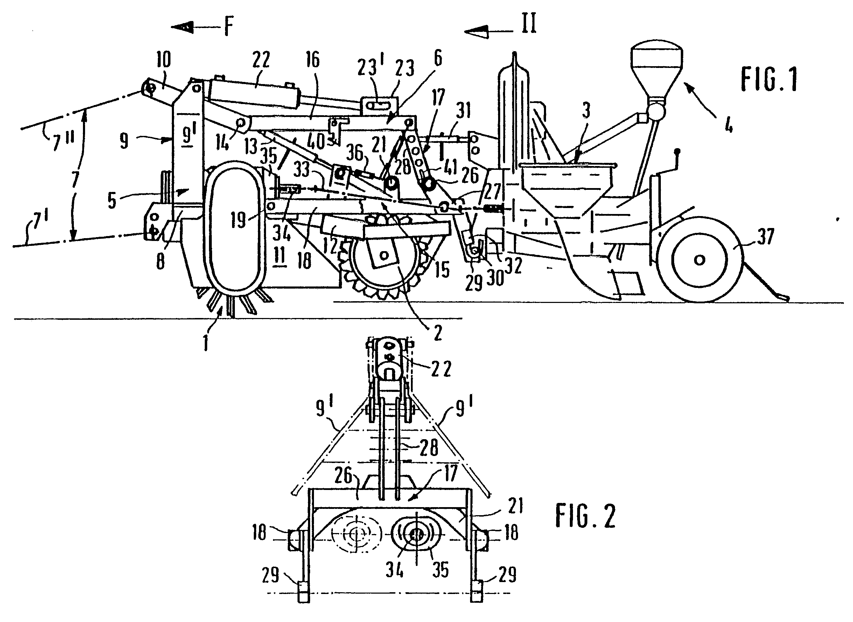

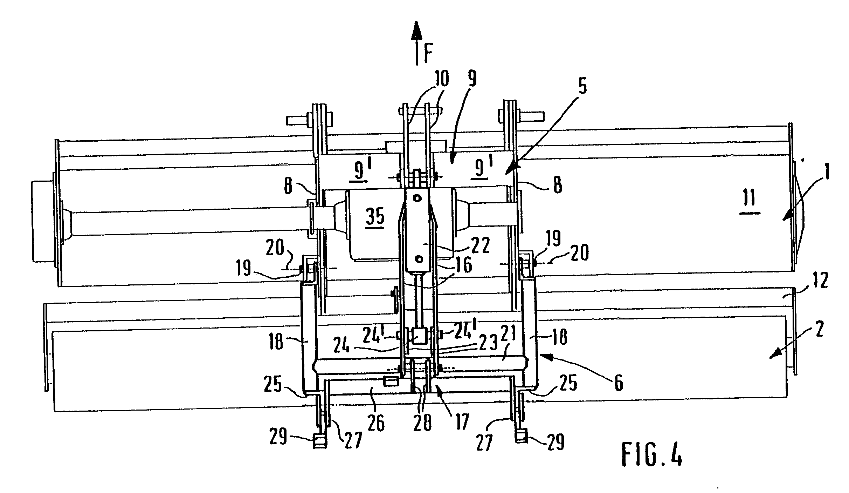

Der in den Figuren 1 bis 4 dargestellte erfindungsgemäße Geräteverbund besitzt einen zapfwellengetriebenen Zinkenrotor 1 sowie eine dahinter angeordnete Krümlerwalze 2 als vorauslaufendes Gerät und eine Einzelkorndrillmaschine 3, die mit einem Mikro-Granulatstreuer 4 kombiniert ist, als nachlaufende Geräteanordnung bzw. -kombination.

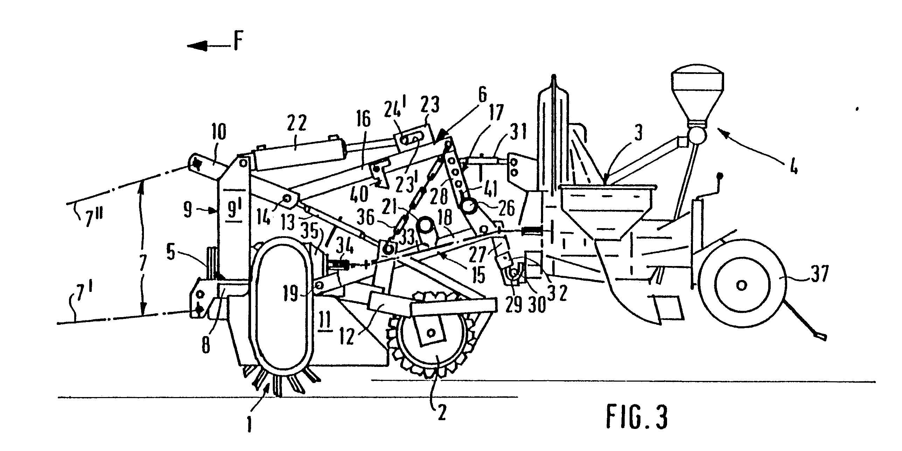

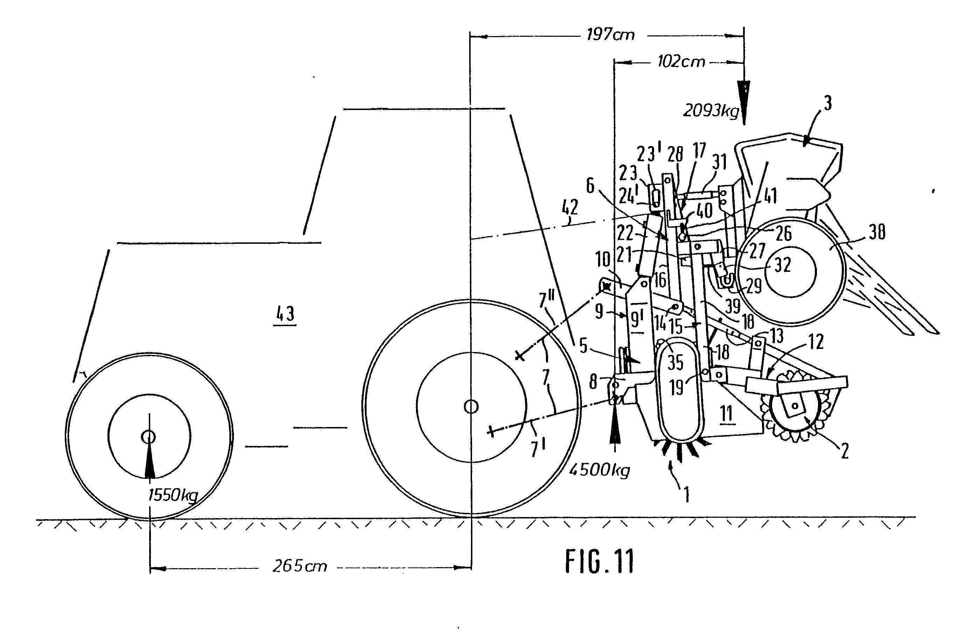

Das vorauslaufende Gerät, d.h. der Zinkenrotor 1 sowie die Krümlerwalze 2 sind unmittelbar an einem bockartigen Rahmen 5 angeordnet, während die nachlaufende Gerätekombination, d.h. die Einzelkorndrillmaschine 3 sowie der Mikro-Granulatstreuer 4 am Rahmen 5 mittels eines Hubwerkes 6 angeordnet sind, mit dem die nachlaufende Gerätekombination aus der in Fig. 1 dargestellten Arbeitslage zur Erleichterung von Wendemanövern u. dgl. in die in Fig. 3 dargestellte, gegenüber der Arbeitslage nur wenig angehobene Aushebelage sowie in eine Transportstellung (vgl. auch Fig. 11) angehoben werden kann, in der sich die nachlaufende Gerätekombination oberhalb des vorauslaufenden Gerätes befindet.

Der bockartige Rahmen 5, welcher mittels eines nur schematisch angedeuteten Dreipunktgestänges 7 an einem Zug- oder Schlepperfahrzeug höheneinstellbar angeordnet ist, besteht im wesentlichen aus miteinander gegebenenfalls durch Traversen verbundenen Längsträgern 8 sowie einem damit verbundenen Ständer 9, an dessen — in Fahrtrichtung gesehen — dachförmig zueinander angeordneten Seitenteilen 9' zur Längsrichtung leicht nach hinten geneigte Schrägglieder 10 fest angeordnet sind. An den vorderen Enden der Längsträger 8 sind Kupplungsstücke für die Unterlenker 7' des Dreipunktgestänges angeordnet, während sich der geräteseitige Befestigungspunkt des Oberlenkers 7" des Dreipunktgestänges 7 an den vorderen Enden der Schrägglieder 10 befindet.

Der gehäuseartige Rahmen 11 des Zinkenrotors 1 ist zur Halterung des Zinkenrotors 1 am bockartigen Rahmen 5 an dessen Längsträgern 8 an nicht näher dargestellten Befestigungs- bzw. Anschlußpunkten befestigt.

Der Tragrahmen 12 der Krümlerwalze 2 ist einerseits schwingenartig an dafür vorgesehenen Anschlußpunkten an den hinteren Enden der Längsträger 8 befestigt und andererseits mittels einer verstellbaren Spindel 13 höheneinstellbar gegen die Schrägglieder 10 abgestützt, welche an ihren hinteren Enden dafür geeignete Anschlußpunkte 14 besitzen.

Das Hubwerk 6 besteht im wesentlichen aus einem Unterund Obergestänge 15 bzw. 16, welches in Seitenansicht parallelogrammartig mit einem Tragteil 17 zur Ankopplung der nachlaufenden Gerätekombination verbunden ist.

Das Untergestänge 15 weist zwei stabile, rohrförmige Längslenkereinheiten 18 auf, die an ihren Vorderenden scharnierartig an dafür vorgesehenen Anschlußpunkten 19 an den hinteren Enden der Längsträger 8 des bockartigen Rahmens 5 um quer zum Gerät verlaufende Achsen 20 schwenkbar angelenkt und mittels einer starken, rohrförmigen Querverstrebung 21 zu einer in Draufsicht etwa H-förmigen verwindungssteifen Hubschwingeneinheit fest verbunden sind. Die Querverstrebung 21 ist aufgrund entsprechend bogenförmiger Ausbildung im wesentlichen oberhalb — bei der Arbeitsstellung entsprechender Lage der Hubschwingeneinheit 18/21 — einer die Längslenkereinheiten 18 umfassenden Ebene angeordnet.

Als Obergestänge 16 dienen zwei parallel angeordnete Flachbänder, die an den Anschlußpunkten 14 an den hinteren Enden der Schrägglieder 10 des bockartigen Rahmens 5 um zur Gerätequerachse parallele Achsen schwenkgelagert sind. Das Obergestänge 15 ist mittels eines Kolben-Zylinder-Aggregates 22 antreibbar, welches einerseits zwischen den oberen Enden der Seitenteile 9' des Trägerbockes 9 des bockartigen Rahmens 5 um eine zur Gerätequerachse parallele Achse schwenkbar befestigt ist und dessen anderes Ende an am Obergestänge 16 angeordneten Langlochteilen 23 mit begrenztem Spiel in Richtung der Längserstreckung des Obergestänges 16 verschiebbar und um eine zur Gerätequerachse parallele Achse schwenkbar angeordnet ist. Dazu weist das Kolben-Zylinder-Aggregat 22 ein T-förmiges Endstück 24 auf, dessen seitliche Zapfen 24' die Langlöcher 23' der Langlochteile 23 durchsetzend angeordnet sind.

Das Tragteil 17, welches einerseits an winkelförmigen Halteteilen 25 an den Enden der Längslenkereinheiten 18 und andererseits an den hinteren Enden des Obergestänges 16 gelenkig gelagert ist, besteht im wesentlichen aus einem durch ein Mittelteil 26 und an dessen Enden angeordneten Schenkelteilen 27 gebildeten U-förmigen Rahmenteil mit einem Ausleger 28, der undrehbar mit dem Mittelteil 26 verbunden ist.

Das Tragteil ist mittels der Schenkelteile 27 derart an den Halteteilen 25 gelenkig gelagert, daß das Mittelteil 26 oberhalb — bei der Arbeitsstellung zugeordneter Lage des Hubwerkes 6 — der Längslenkereinheiten 18 in etwa gleicher Höhe wie die Querverstrebung 21 verläuft.

An den freien Enden der Schenkelteile 27 sind Hakenelemente 29 angeordnet, in die die nachlaufende Gerätekombination 3, 4 mittels entsprechender Kupplungszapfen 30 eingehängt werden kann. Im übrigen ist die nachlaufende Gerätekombination mittels einer Spindel 31 gehaltert, welche zwischen dem Ausleger 28 sowie einem Anschlußteil der nachlaufenden Gerätekombination 3, 4 angeordnet ist. Zur leichteren Anpassung an unterschiedliche nachlaufende Geräteanordnungen ist im Ausleger 28 eine Lochreihe angeordnet, um die Spindel 31 gegebenenfalls in unterschiedlichen Höhen anordnen zu können.

Um eine ungewollte Entkupplung der Hakenelemente 29 sowie der Kupplungszapfen 30 zu verhindern, sind an den Hakenelementen Sperrglieder 32 vorgesehen, die im dargestellten Beispiel aus rechteckigen Platten bestehen, welche im Bereich einer Ecke etwas seitlich und oberhalb der Hakenelement 29 pendelbar derart aufgehängt sind, daß sie mit ihrer unteren Längskante eine Lage dicht oberhalb der Kupplungszapfen 30 einzunehmen suchen, so daß dieselben nicht aus den Mäulern der Hakenelemente 29 freikommen können. Beim Einhängen der nachlaufenden Gerätekombination 3, 4 werden die Sperrglieder 32 von den Kupplungszapfen 30 durch Druck auf die zur nachlaufenden Gerätekombination 3, 4 weisenden Kanten der Sperrglieder 32 ausgelenkt.

Dabei kann die Anordnung der Sperrglieder 32 so getroffen sein, daß den Kupplungszapfen 30 und damit der nachlaufenden Gerätekombination 3, 4 gegenüber dem Tragteil 17 praktisch keinerlei Bewegungsspiel gegeben sind.

Die Einzelkorndrillmaschine 3 ist im dargestellten Beispiel mittels einer Gelenkwelle 33 antreibbar, die unterhalb der Querverstrebung 21 des Untergestänges 15 sowie unterhalb des Mittelteiles 26 des Tragteiles 17 angeordnet ist und die Einzelkorndrillmaschine 3 antriebsmäßig mit einer Abtriebswelle 34 des Getriebes 35 des Zinkenrotors 1 koppelt, welcher seinerseits mittels einer nicht dargestellten Zapfwelle vom Motor des Zugoder Schlepperfahrzeuges angetrieben wird.

Die montierte Gelenkwelle 34 läßt in der Regel nur begrenzte Knickwinkel zu. Um eine Beschädigung der Gelenkwelle 34 zu verhindern, kann der Hubbereich des Hubwerkes 6 mittels einer Kette 36 begrenzt werden, die einerseits — an ihrem hubteilseitigen Ende — am oberen Ende des Auslegers 28 und andererseits — an ihrem rahmenseitigen Ende — an der Verbindung zwischen der Spindel 13 und dem Tragrahmen 12 der Krümlerwalze 12 eingehängt wird. Damit kann das Hubwerk 6 bei eingehängter Kette 36 nur bis in die in Fig. 3 dargestellte Aushebelage gebracht werden.

Der in den Fig. 1 bis 4 dargestellte Geräteverbund arbeitet wie folgt :

In Arbeitsstellung, vgl. Fig. 1, wird der Boden bei Fahrt in Fahrtrichtung F mittels des zapfwellengetriebenen Zinkenrotors 1 tief durchgearbeitet und von der dahinter angeordneten Krümlerwalze 2 unter intensiver Zerkleinerung der vom Zinkenrotor 1 hinterlassenen Schollen geglättet und festgedrückt. Mittels der als Teil der nachlaufenden Gerätekombination angeordneten Einzelkorndrillmaschine 3 wird Saatgut in den Boden eingebracht, und mit dem nachfolgenden Mikro-Granulatstreurer wird das Saatgut gegen Schädlingsbefall geschützt. Bei auftretenden Bodenwellen kann sich die durch Räder 37 abgestützte nachlaufende Gerätekombination 3, 4 unter entsprechender Anhebung des Hubwerkes 6 gegenüber dem vorauslaufenden Gerät 1, 2 unter Ausnutzung des Höhenspieles anheben, welches dem Hubwerk 6 aufgrund der Langlöcher 23' zur Verfügung steht. Eine nennenswerte Relativbewegung zwischen dem Tragteil 17 sowie der nachlaufenden Gerätekombination 3, 4 wird durch die Sperrglieder 32 an den Hakenelementen 29 verhindert. Bei Wendemanövern wird die nachlaufende Gerätekombination durch Betätigung des Kolben-Zylinder-Aggregates 22 und entsprechende Verschwenkung des Hubwerkes 6 in die Aushebelage gabracht, vgl. Fig. 3, bei der die in dieser Lage gespannte Kette 36 unzulässig große Knickwinkel der Gelenkwelle 33 verhindert und die Lenkbarkeit des Zug- bzw. Schlepperfahrzeuges aufgrund der vom Boden abgehobenen Räder 37 verbessert wird. Zum Strassentransport werden die Kette 36 gelöst sowie die Gelenkwelle 33 aufgetrennt, so daß die nachlaufende Gerätekombination 3, 4 bei entsprechender Betätigung des Kolben-Zylinder-Aggregates 22 in eine Lage oberhalb des vorauslaufenden Gerätes 1, 2 gebracht werden kann. Sobald diese Lage erreicht ist, wird das Gesamtgerät durch Verstellung des Dreipunktgestänges 7 am Zug- bzw. Schlepperfahrzeug angehoben, so daß es keinerlei Bodenberührung mehr hat.

Die Transportstellung ist in Fig. 11 für einen Geräteverbund dargestellt, welcher im wesentlichen dem in den Fig. 1 bis 4 dargestellten Gerät entspricht, jedoch besteht die nachlaufende Geräteanordnung lediglich aus einer Drillmaschine 3, welche durch Bodenberührung und Drehung ihrer Räder 38 angetrieben wird, so daß sich die Anordnung einer Gelenkwelle erübrigt. In der in Fig. 11 dargestellten Transportstellung nehmen das Obergestänge 16 sowie das Untergestänge 15 eine Übertotpunktlage ein, die beispielsweise durch Anschlag der Querverstrebung 21 am Obergestänge 16 oder durch Anschlagelemente 39 begrenzt wird, die an den Schenkelteilen 27 des Tragteiles 17 angeordnet sind und zur Begrenzung der Transportstellung mit den Längslenkereinheiten 18 des Untergestänges 15 zusammenwirken.

Zur Sicherung der Transportstellung dient eine Klinke 40, welche am Obergestänge 16 angeordnet ist und einen Rastvorsprung 41 am Ausleger 28 des Tragteiles 17 übergreift. Zur manuellen Betätigung der Klinke 40 dient ein Seilzug 42. Die durch Schwerkraft im Sinne einer Schwenkung im Uhrzeigersinn beaufschlagte Klinke 40 wird durch nicht dargestellte Anschläge bei vertikal stehendem Obergestänge 16 in etwa horizontaler Lage gehalten, so daß der Rastvorsprung 41 die Klinke 40 durch Zusammenwirken mit deren Schrägkante beim Einschwenken des Hubwerkes 6 in die Transportstellung anheben kann, bis die Klinke 40 dann bei Erreichen der Transportstellung in die in Fig. 11 dargestellte Riegellage fällt.

Im übrigen sind in Fig. 11 typische Abmessungen, Gewichte und auftretende Kräfte angegeben. Der in Transportstellung befindliche Geräteverbund mit einem Gesamtgewicht von 2 093 kg sucht die Vorderachse des Schlepperfahrzeuges 43 zu entlasten, wobei das im dargestellten Beispiel mit einem Hebelarm von 197 cm bezüglich der Hinterachse des Schlepperfahrzeuges 43 wirkende Gerätegewicht an der Vorderachse aufgrund des Radstandes von 265 cm eine aufwärtsgerichtete Kraft von 1 550 kg verursacht. Im übrigen sucht der Geräteverbund die Unterlenker 7' des Dreipunktgestänges 7 aufgrund auftretender Kippmomente mit einer Kraft von 4 500 kg, gemessen an der Verbindung zwischen Unterlenker 7' und Geräteverbund, anzuheben.

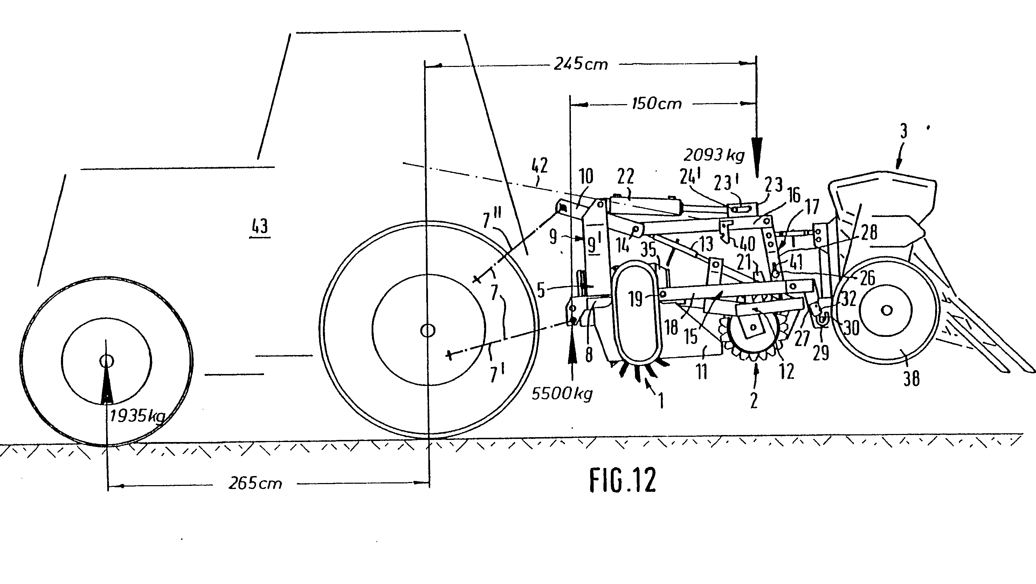

Fig. 12 zeigt die entsprechenden Verhältnisse für den Fall, daß der Geräteverbund mit gegenüber dem vorauslaufenden Gerät 1, 2 abgesenkter nachlaufender Geräteanordnung 3 mittels des Dreipunktgestänges 7 in angehobener Stellung gehalten wird. Jetzt wirkt das Gerätegewicht von 2 093 kg bezüglich der Hinterachse des Schlepperfahrzeuges 43 mit einem Hebelarm von 245 cm, so daß an der Vorderachse eine aufwärtsgerichtete Kraft von 1 935 kg auftritt. Gleichzeitig sucht der Geräteverbund die Unterlenker 7" an der Verbindung der Unterlenker 7" mit dem Geräteverbund mit einer Kraft von 5 500 kg nach oben zu schwenken, da nunmehr das Gerätegewicht (2 093 kg) bezüglich der hinteren Enden der Unterlenker 7' mit einem Hebelarm von 150 cm wirkt, bei der in Fig. 11 dargestellten Lage dagegen hat der entsprechende Hebelarm nur eine Länge von 102 cm.

Bei der in Fig. 11 dargestellten Transportstellung wird also ein wesentlich besserer Andruck der Vorderräder auf den Boden erreicht, außerdem wird das Dreipunktgestänge 7 weniger belastet. Schließlich wird die Manövrierfähigkeit aufgrund der geringeren Gesamtlänge von Schlepperfahrzeug 43 und Geräteverbund erheblich verbessert.

Da das Gewicht der nachlaufenden Geräteanordnung bzw. -kombination mittels des Hubwerkes 6 und insbesondere mittels der verwindungssteifen Hubschwingeneinheit, welche durch die Längslenkereinheiten 18 sowie die Querverstrebung 21 gebildet wird, direkt, d. h. ohne Zwischenschaltung tragender Teile des vorauslaufenden Gerätes 1 bzw. 2, auf dem verwindungssteifen bockartigen Rahmen 5 abgestützt ist, wird eine außerordentlich stabile Konstruktion erzielt.

Die hohe Steifigkeit des bockartigen Rahmens 5 sowie des Hubwerkes 6 ermöglicht den Verbund unterschiedlichster Einzelgeräte. Insbesondere besteht die Möglichkeit, am Hubwerk Geräte anzuordnen, die beim Arbeitseinsatz Kräfte in Richtung der Gerätequerachse auf das Hubwerk 6 bzw. den bockartigen Rahmen 5 ausüben. Im übrigen wird die Variabilität der Anordnungsmöglichkeiten dadurch erhöht, daß das am bockartigen Rahmen 5 angeordnete Gerät keinerlei mittragende Funktion, insbesondere keinerlei das Hubwerk 6 mittragende Funktion, übernehmen muß.

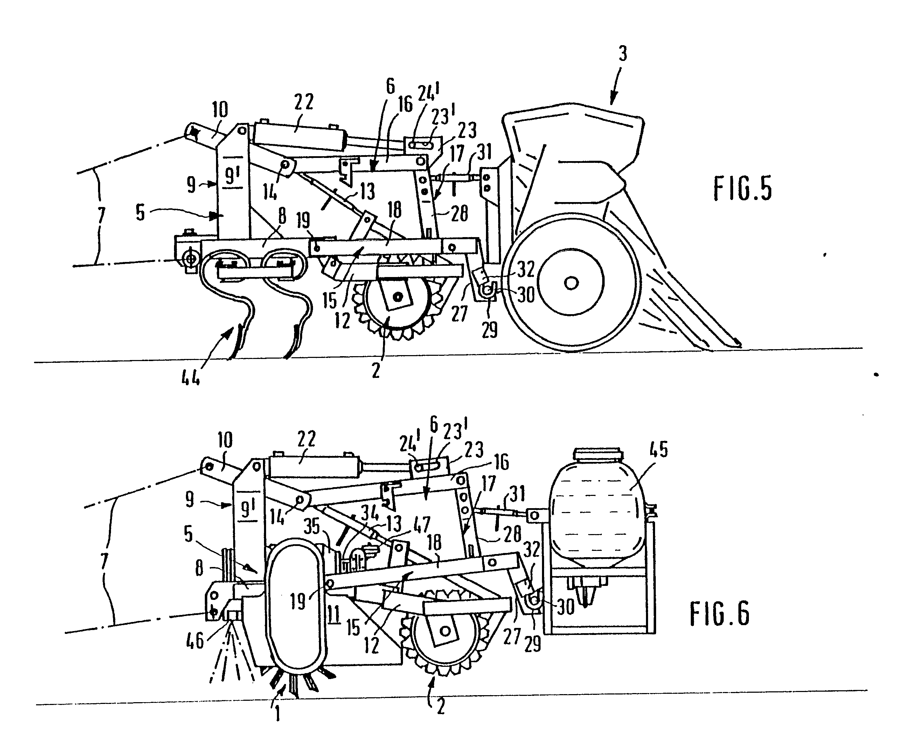

In den Fig. 5 bis 10 sind unterschiedliche Kombinationen für den Geräteverbund dargestellt.

Gemäß Fig. 5 sind am bockartigen Rahmen 5 eine Gareegge 44 mit der Krümlerwalze 2 kombiniert angeordnet. Als nachlaufende Geräteanordnung ist am Hubwerk 6 die mittels ihrer Räder 38 angetriebene Drillmaschine 3 vorgesehen.

In Fig. 6 sind am bockartigen Rahmen 5 der Zinkenrotor 1 sowie die Krümlerwalze 2 angeordnet. Die Hubvorrichtung 6 trägt ein Faß 45 für ein Pflanzenschutzmittel, welches mittels vor dem Zinkenrotor 1 angeordneter Sprühdüsen 46 ausgebracht wird. Eine in die nicht dargestellte Verbindungsleitung zwischen Faß 45 und Sprühdüsen 46 eingeschaltete Pumpe 47 ist an die Abtriebswelle 34 des Getriebes 35 des Zinkenrotors 1 antriebsmäßig gekoppelt.

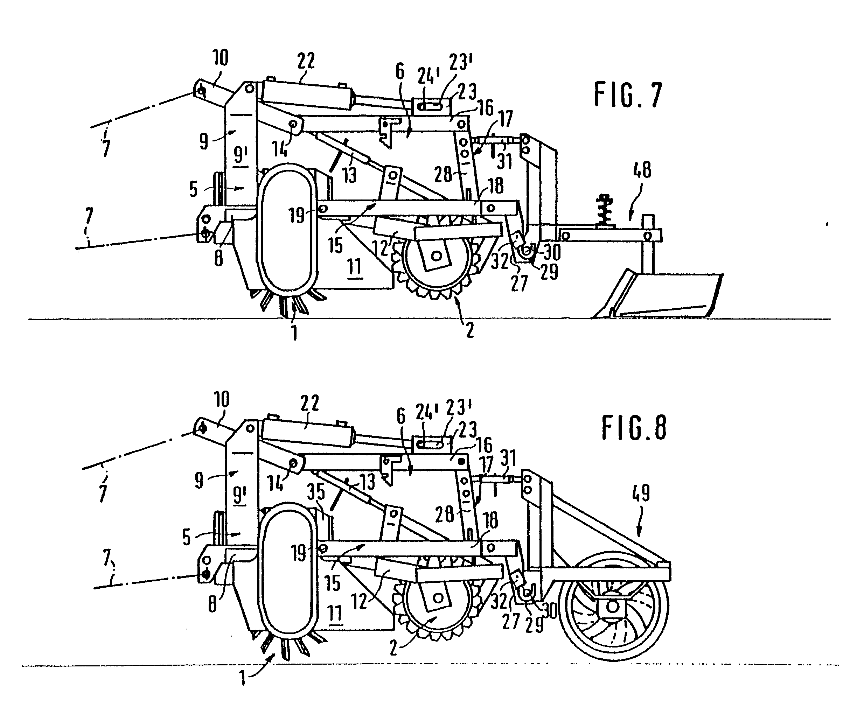

Nach Fig. 7 sind als vorauslaufendes Gerät wiederum der Zinkenrotor 1 sowie die Krümlerwalze 2 vorgesehen. Als nachlaufende Geräteanordnung ist am Hubwerk 6 eine Dammbildungseinrichtung 48 befestigt.

Der Geräteverbund nach Fig. 8 unterscheidet sich von demjenigen nach Fig. 7 im wesentlichen darin, daß als nachlaufendes Gerät eine Walze 49 vorgesehen ist.

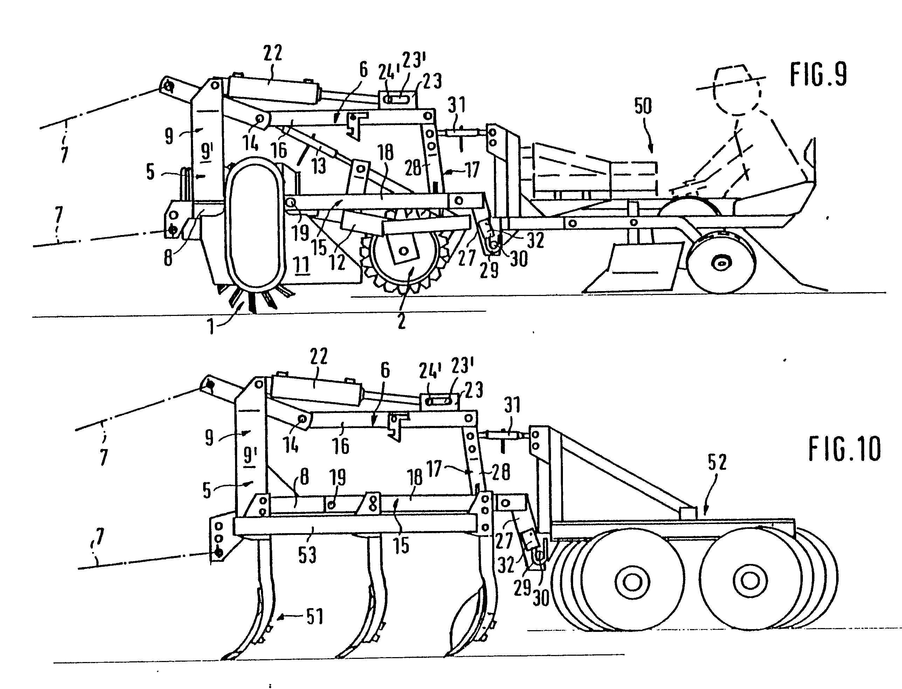

In Fig. 9 ist die Möglichkeit der Anordnung einer Kartoffellegemaschine 50 am Hubwerk 6 dargestellt.

Die Fig. 10 zeigt schließlich die Kombination eines Grubbers 51 als vorauslaufendes Gerät mit einer Scheibenegge 52 als nachlaufender Geräteanordnung. Der Grubber 51 besitzt einen eigenen Geräterahmen 53, der mit dem bockartigen Rahmen 5 fest verbunden ist.

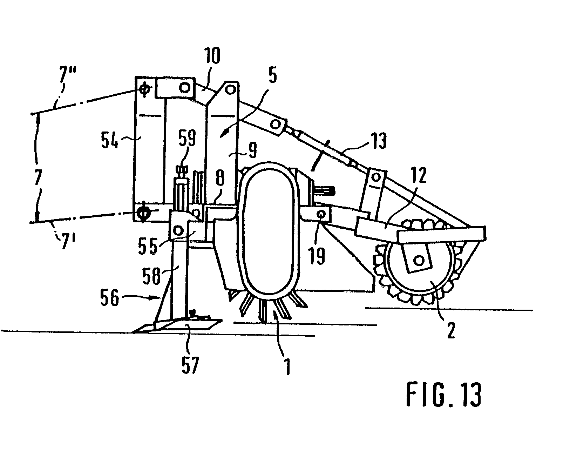

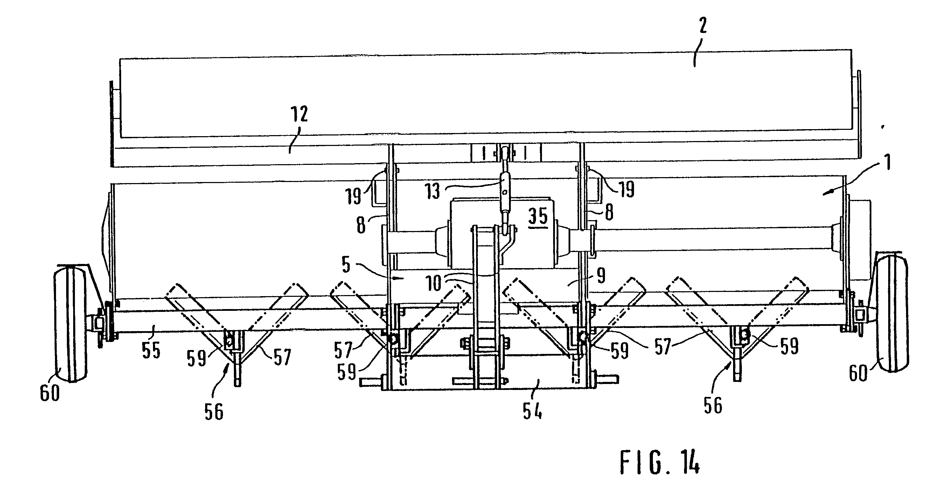

Gemäß den Fig. 13 und 14 läßt sich der bockartige Rahmen 5 mit einem an das Dreipunktgestänge 7 anschließbaren Vorschaltrahmen 54 verbinden. Dazu werden die an den Längsträgern 8 des bockartigen Rahmens 5 zur Ankopplung an die Unterlenker 7' des Dreipunktgestänges 7 vorgesehenen Verbindungslaschen abgeschraubt. Die damit an den Vorderenden der Längsträger freiwerdenden Anschlußpunkte dienen dann zusammen mit den Schräggliedern 10 zur Befestigung des Vorschaltrahmens 54. Durch Anordnung des Vorschaltrahmens 54 wird hinreichend Platz geschaffen, um vor dem am bockartigen Rahmen 5 angeordneten Zinkenrotor 1 — bzw. vor einer stattdessen angeordneten Geräteeinheit bzw. -kombination, z. B. Kreiselegge oder anderes zapfwellengetriebenes Gerät — eine Querbalkenanordnung 55 zu befestigen, die grubberartige Werkzeuge 56 mit beispielsweise gänsefußartigen Scharblättern 57 trägt. An den Haltestielen 58 der Werkzeuge 56 sind Verstellspindeln 59 zur schnellen Höhenverstellung der Scharblätter 57 bzw. Werkzeuge 56 angeordnet. Damit besteht die vorteilhafte Möglichkeit, die im Bereich der von den Rädern des Zug- oder Schlepperfahrzeuges hinterlassenen Spuren arbeitenden Werkzeuge 56 tiefer einzustellen. Außerdem können an der Querbalkenanordnung 55 höhenverstellbare Abstützräder 60 angeordnet sein, die insbesondere bei der Bearbeitung leichter Böden ein zu tiefes Eindringen der Bodenbearbeitungswerkzeuge des Geräteverbundes in den Boden verhindern sollen.

Der erfindungsgemäße Geräteverbund zeichnet sich durch höchste Variabilität aus, indem am bockartigen Rahmen 5, welcher gegebenenfalls durch den Vorschaltrahmen verlängerbar ist, sowie am Hubwerk aufgrund der Stabilität dieser Teile praktisch beliebige Geräteeinheiten — auch solche mit Antrieb durch Zapf- bzw. Gelenkwelle oder andere Antriebsmittel — angeordnet werden können. Die Verwendung bereits vorhandener Geräteeinheiten, wie Drillmaschine oder Zinkenrotor, im Verbund ist ohne weiteres möglich, ebenso wie eine nachträgliche Umrüstung oder Erweiterung.

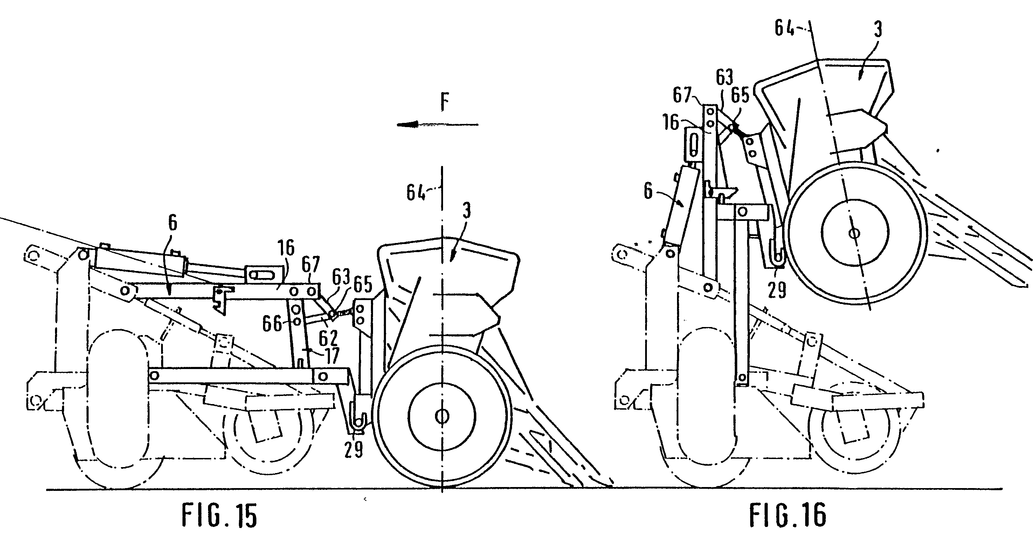

Die Figuren 15 und 16 zeigen eine Ausführungsform der Erfindung, bei der die nachlaufende Geräteanordnung — hier wiederum eine Drillmaschine 3 — beim Anheben aus der in Fig. 15 dargestellten Arbeitslage in die in Fig. 16 dargestellte Transportstellung unter Schwenkung um eine Gelenkachse, welche durch die tragteilfesten Hakenelemente 29 bestimmt wird, etwas nach vorn in Fahrtrichtung F gekippt wird, wie durch die unterschiedliche Neigung einer bezüglich der Drillmaschine 3 festen Achse 64 deutlich wird. Dadurch wird der Schwerpunkt der nachlaufenden Geräteanordnung bzw. -kombination in Transportstellung noch weiter in Fahrtrichtung F nach vorn verlagert, so daß die Belastung des Schlepperfahrzeuges entsprechend verringert wird.

Im Dargestellten Beispiel ist die Drillmaschine 3 oberhalb der Hakenelemente 29 mit dem Knie 65 einer Kniehebelanordnung gekoppelt, deren einer Hebel 62 bei 66 am Tragteil 17 angelenkt ist, während der andere Hebel 63 am Obergestänge 16 an einem Punkt 67 angelenkt ist, der in Arbeitsstellung des Hubwerkes 6 gegenüber dem tragteilseitigen Anlenkpunkt 66 des Hebels 62 entgegen der Fahrtrichtung F nach rückwärts versetzt ist. Somit wird das Knie 65 bezüglich des Tragteiles 17 bei Schwenkung des Hubwerkes 6 aus der Arbeits- in die Transportstellung um ein dem Versatz der Anlenkpunkte 66 und 67 entsprechendes Maß in Fahrtrichtung F nach vorn verlagert.

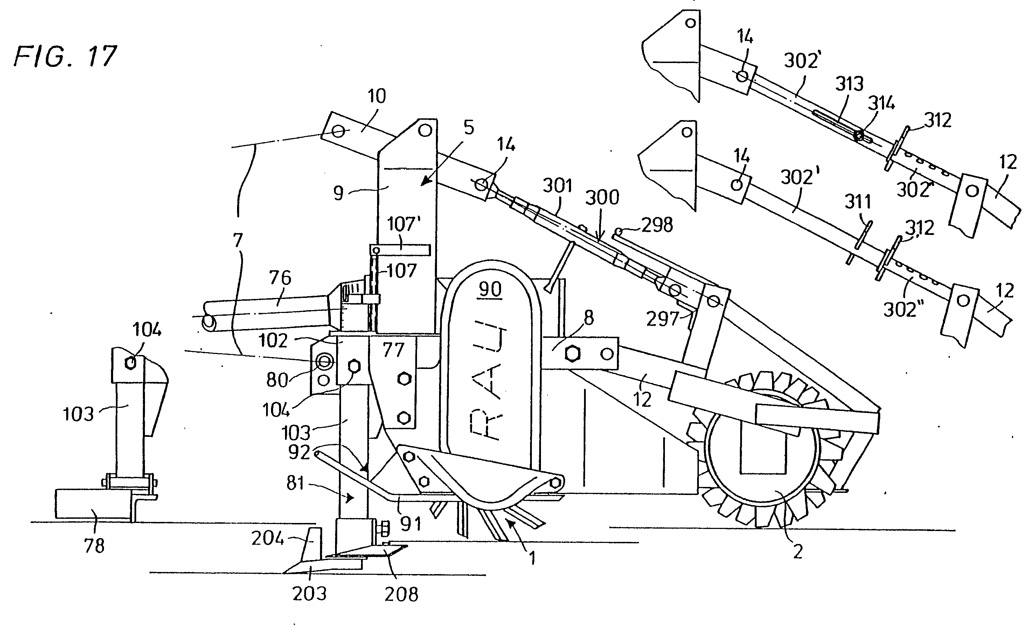

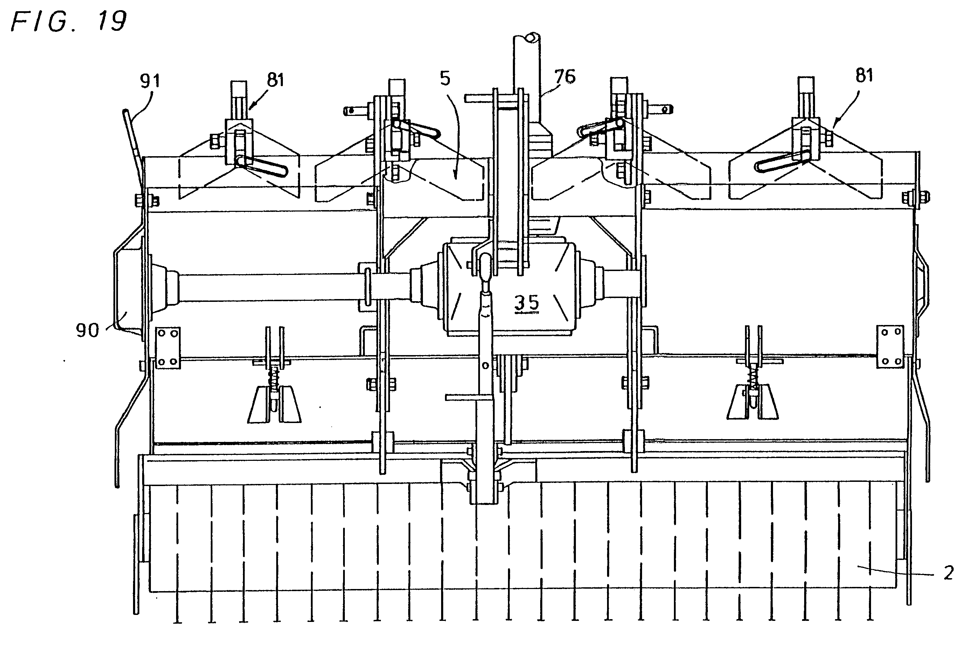

Der in den Fig. 17 bis 19 dargestellte Geräteverbund entspricht weitgehend der Anordnung, wie sie in den Fig. 13 und 14 dargestellt ist. Jedoch wird bei der Anordnung gemäß den Fig. 17 bis 19 eine besonders gedrungene Bauweise erreicht, bei der die Grubber- bzw. Scharwerkzeuge 81 ohne gesonderten Vorschaltrahmen am bockartigen Rahmen 5 bzw. an daran angeordneten seitlichen Auslegern 75 angeordnet sind.

Die Ausleger 75 sind seitlich an den Längsträgern 8 des bockartigen Rahmens angeflanscht, so daß der vom Bock 9 umgrenzte Querschnitt für den Durchtritt der Zapfwelle 76 zum Getriebe 35 des Zinkenrotors 1 vollständig freibleibt. An ihren äußeren Enden sind die Ausleger 75 mittels flanschartiger Platten 77 mit Rahmenteilen des Zinkenrotors 1 verbunden, so daß derselbe eine besonders stabile Lage einnimmt.

Zur Halterung der Haltestiele 103 der Scharwerkzeuge 81 dienen Aufnahmeteile 102, welche die Haltestiele 103 hülsenförmig umfassen. Die an den Auslegern 75 angeordneten Aufnahmeteile 102 haben voneinander einen Abstand, der annähernd der Spurweite des Zug- bzw. Schlepperfahrzeuges entspricht, so daß die jeweiligen Werkzeuge die von den Antriebsrädern hinterlassenen Spurrillen wirksam einebnen können. Die am bockartigen Rahmen 5 angeordneten Aufnahmeteile 102 sind auf der Innenseite der Längsträger 8 unmittelbar hinter den Anschlußpunkten des Dreipunktgestänges 7 angeordnet. Die aufgrund des Bodenwiderstandes auf die Haltestiele 103 einwirkenden Momente werden somit direkt bzw. über die Ausleger 75 vom bockartigen Rahmen 5 aufgenommen.

Statt an Auslegern 75 können die äußeren Aufnahmeteile 102 gegebenenfalls auch an Rahmenteilen des Zinkenrotors 1 angeordnet werden, welche dazu mittels einer Verstärkung versteift werden. Da die Rahmenteile des Zinkenrotors 1 sowie die Verstärkung unterhalb des Getriebes 35 des Zinkenrotors angeordnet sind, kann die Verstärkung ohne Beeinträchtigung der Anordnung der Zapfwelle 76 durchgehend ausgebildet sein.

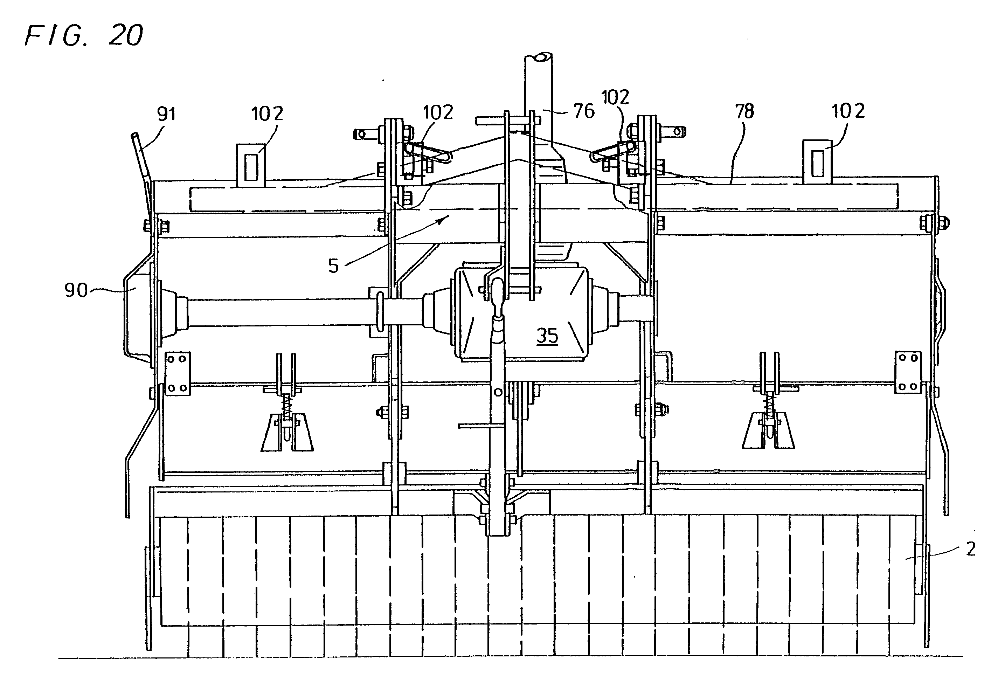

Anstelle der Scharwerkzeuge 81 kann an den Haltestielen 103 auch eine Planierschiene 78 angeordnet sein, z. B. mit in Draufsicht V-förmigem Mittelteil, vgl. Fig. 17 (links) bzw. Fig. 20. Mit Planierschiene 78 wird der Geräteverbund vor allem zur Sekundärbearbeitung eingesetzt, z. B. im Frühjahr zur Bearbeitung von Flächen, die vor dem Winter gepflügt worden sind.

Sowohl bei der Ausführungsform nach den Fig. 17 bis 19 als auch bei derjenigen nach Fig. 20 ist an einem seitlichen Getriebegehäuse 90 des Zinkenrotors 1 eine kufenförmige Stange 91 angeordnet, welche in Draufsicht leicht schräg zur Fahrtrichtung mit dem vorderen Ende nach auswärts gerichtet ist. Das vordere Ende ist darüber hinaus nach oben derart aufgebogen, daß zwischen dem Getriebegehäuse 90 und dem vorderen Ende der kufenförmigen Stange 91 ein Abstrandsraum 92 freibleibt. Die kufenförmige Stange 91 dient einerseits zum Schutz des Getriebegehäuses 90, indem sie dasselbe vor Steinen od. dgl. auf dem zu bearbeitenden Boden schützt. Außerdem verhindert die kufenförmige Stange 91, daß langsträhniges Gut am Getriebegehäuse 90 hängenbleibt. Vielmehr schiebt sich die kufenförmige Stange 91 mit ihrem vorderen Ende über das strähnige Material, wobei dasselbe entweder zum Zinkenrotor 1 hin oder nach außen verschoben wird. Nicht erfaßte kürzere Strähnen können durch den Abstandsraum 92 nach seitlich außen hin durchtreten.

Bei den Ausführungsformen nach den Fig. 17 bis 20 dient zur höhenverstellbaren Abstützung der Krümlerwalze 2, welche wiederum an einem um eine Querachse schwenkbar am bockartigen Rahmen 5 angelenkten Tragrahmen 12 angeordnet ist, eine kniehebelartige Abstützung 300, deren einer Hebelarm durch eine längenverstellbare Spindel 301 gebildet wird. Das andere Hebelteil 299 kann mittels einer Handhabe 298 aus der dargestellten Übertotpunktstellung, in der die kniehebelartige Abstützung 300 Druckkräfte zu übertragen vermag, aufwärtsgeschwenkt werden, so daß die Spindel 301 von Zug- und Druckbelastungen vollständig befreit wird und entsprechend leicht einstellbar ist. Die dargestellte Übertotpunktstellung wird durch das sich gegen die Spindel 301 anlegende freie Ende 298 des Hebels 299 bzw. einen daran mit einem Teil des Tragrahmens 12 zusammenwirkenden Anschlag 297 fixiert, derart daß das Kniegelenk zwischen der Spindel 301 und dem Hebelteil 299 in Seitenansicht etwas unterhalb einer Geraden liegt, die durch die Gelenkachsen der rahmenseitigen Anlenkpunkte von Spindel 301 und Hebelteil 299 verläuft.

Wird die Spindel 301 nach Entlastung durch Aufwärtsschwenken des Hebelteiles 299 verstellt, so kann die Abstützung 300 in einfacher Weise dadurch wiederum in die dargestellte Übertotpunktlage gebracht werden, daß der bockartige Rahmen 5 mittels des Dreipunktgestänges 7 vom Zug- bzw. Schlepperfahrzeug aus angehoben und nachfolgend wieder abgesenkt wird.

Gegebenenfalls kann anstelle einer kniehebelartigen Abstützung 300 auch eine teleskopartige Anordnung 302 angeordnet sein, deren Teleskopteile 302' und 302'' beispielsweise als rohrförmige Teile ineinanderschiebbar angeordnet sind. An beiden Teilen 302' und 302'' sind miteinander fluchtende Lochreihen 310 angeordnet, in die Riegelteile 311 bzw. Anschläge 312 einsetzbar sind. Dabei wird das Riegelteil 311 derart angeordnet, daß es sowohl im Teil 302' als auch im Teil 302'' ein Loch der Lochreihen 310 durchsetzt und die Teile 302' und 302'' unverschiebbar miteinander verbindet. Der Anschlag 312 durchsetzt lediglich ein Loch der im Teil 302' angeordneten Lochreihe und bestimmt dementsprechend den maximalen Einschubweg des Teiles 302'' im Teil 302' und damit die gewünschte Arbeitstiefe des Zinkenrotors 1 gegenüber der Krümlerwalze 2.

Das Riegelteil 311 wird in der Regel nur zum Transport des Geräteverbundes eingesetzt, um die Krümlerwalze 2 zusammen mit dem bockartigen Rahmen 5 anheben zu können. Zur Arbeit auf dem Feld wird das Riegelteil 311 im allgemeinen entfernt, so daß der Rahmen 5 mit dem Zinkenrotor 1 bei Bodenwellen, Steinen od. dgl. nach oben ausweichen kann, ohne daß das Gewicht der Krümlerwalze 2 den Zinkenrotor 1 belastet. Somit werden die Zinken geschont.

Gegebenenfalls können im Teil 302' Schlitze 313 angeordnet sein, die mit fest am Teil 302'' angeordneten Zapfenteilen 314 od. dgl. zur Begrenzung der maximalen Beweglichkeit der Teile 302' und 302'' relativ zueinander zusammenwirken. Die Schlitze 313 ermöglichen wiederum ein Höhenspiel des Zinkenrotors 1 gegenüber der Krümlerwalze 2. Der einstellbare Anschlag 312 am Teil 302'' bestimmt wiederum die gewünschte Arbeitstiefe des Zinkenrotors 1 gegenüber der Krümlerwalze 2.

Für die in den Figuren 17 bis 20 dargestellte Abstützung des Tragrahmens 12 gegenüber dem bockartigen Rahmen 5 wird in dem vorliegenden Patent Kein selbständiger Schutz beansprucht. Diese Anordnung ist begenstand des Europäischen Patentanmeldung 85103774.8 (EP-A-0 153 765).

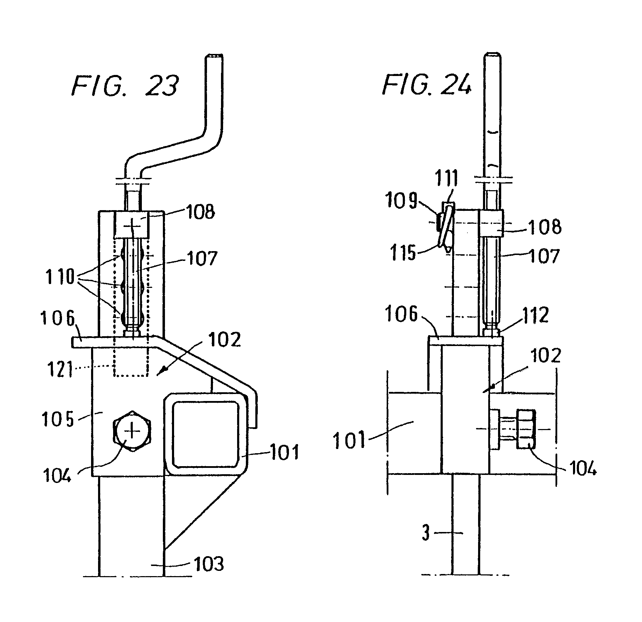

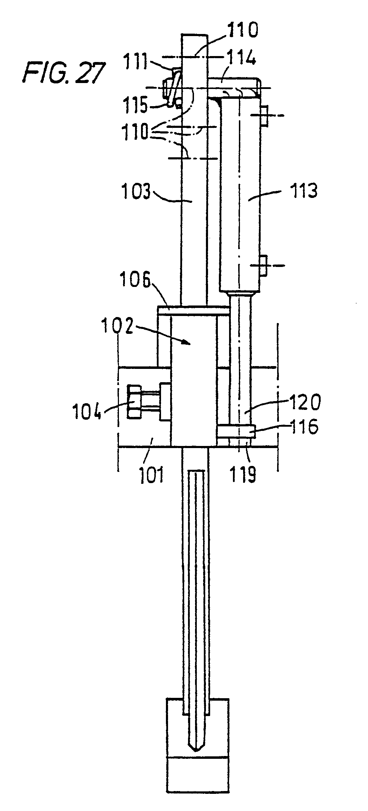

Zur Höhenverstellung der Werkzeuge 81,78 der Geräte nach den Fig. 17 bis 20 bzw. der Grubberwerkzeuge 56 des in den Fig. 13 und 14 dargestellten Gerätes dienen vorzugsweise Anordnungen, wie sie in den Fig. 23 und 27 dargestellt sind.

Gemäß den Fig. 23 und 24 sind an einem rahmenfesten Teil 101, beispielsweise den Auslegern 75 oder dem bockartigen Rahmen (vgl. die Fig. 17 bis 19) Aufnahmeteile 102 angeordnet. in denen die Haltestiele 103 der im übrigen in diesen Figuren nicht dargestellten Werkzeuge vertikal verschiebbar geführt und mittels einer Spannschraube 104 feststellbar sind.

Das Aufnahmeteil 102 wird durch ein — bei Ansicht in Aschsrichtung des Haltestieles 103 — U-förmig gebogenes Blech 105 gebildet, dessen Enden am rahmenfesten Teil 101 angeschweißt sind. Das Blech 105 sowie das Rahmenteil 101 bilden dabei eine im Querschnitt rechteckige Hülse, in der der Haltestiel 103 mit entsprechendem Querschnitt undrehbar, jedoch verschiebbar gehalten wird.

Zur Höhenverstellung des Haltestieles 103 dient bei gelöster Spannschraube 104 eine Verstellspindel 107, welche in einem Gewindeblock 108 durch Drehung verschoben werden kann. Am Gewindeblock 108 ist ein Zapfen 109 angeordnet, welcher in eines der Löcher 110 einer in Haltestiel 103 angeordneten Lochreihe eingeschoben und in dem Loch 110 mittels eines Klappsteckers 111 gesichert ist. Der aus dem Gewindeblock 108 herausragende untere Ende der Verstellspindel wird in einer Vertiefung einer auf einem Kragen 106 od. dgl. des Aufnahmeteiles 104 bzw. auf dem Rahmenteil 101 angeordneten Lagerpfanne 112 gehalten.

Der Gewindeblock 108 sowie die Lagerpfanne 112 bilden das haltestielseitige bzw. rahmenfeste Widerlager der Verstellspindel 107. Wird dieselbe so verdreht, daß der Abstand der genannten Widerlager zunimmt, so wird der Haltestiel 103 und somit das daran angeordnete Bodenbearbeitungswerkzeug zunehmend angehoben. Bei umgekehrter Verdrehung der Verstellspindel senkt sich der Haltestiel 103 mit Bodenbearbeitungswerkzeug unter seinem Eigengewicht ab. Sobald der Haltestiel 103 die gewünschte Höhenlage einnimmt, wird er mittels der Spannschraube 104 festgelegt.

Aufgrund der Steckverbindung zwischen Gewindeblock 108 und Haltestiel 103 können diese beiden Teile jederzeit ohne Aufwand voneinander getrennt werden, so daß ein Auswechseln der Haltestiele 103 leicht möglich ist oder der Gewindeblock 108 mit seinem Zapfen 109 in eines der anderen Löcher 110 eingesetzt werden kann, um die Grobeinstellung der Höhenlage des Haltestieles 103 entsprechend verändern zu können. In der Regel ist jedoch im Haltestiel 103 lediglich ein Loch 110 zur Aufnahme des Zapfens 109 angeordnet, dadurch die Spindel 107 ein hinreichender Verstellbereich gegeben ist.

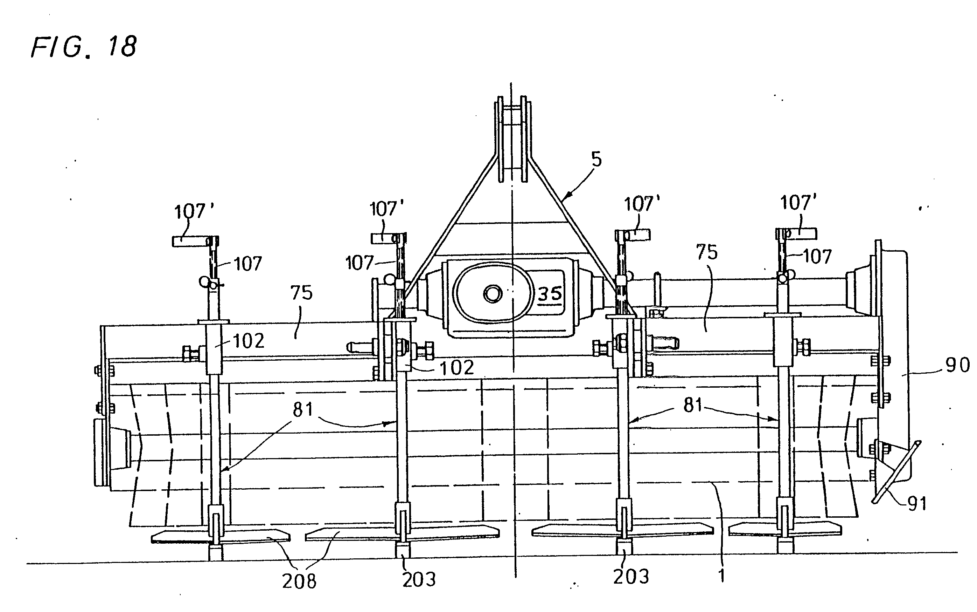

Je nach Platzverhältnissen kann die Gewindespindel 107 — bei entsprechender Anordnung des Gewindeblockes 108 sowie der Lagerpfanne 112 — in Fahrtrichtung seitlich neben den Haltestielen 103, wie es in den Fig. 23 und 24 dargestellt ist, oder vor bzw. hinter den Haltestielen 103 angeordnet sein, wie es vor allem die Fig. 18 zeigt. In der Regel wird die jeweilige Anordnung durch die Platzverhältnisse bestimmt. Die Anordnung der Gewindespindel 107 hinter dem Haltestiel 103 ist jedoch bei Werkzeugen, die hinter den Antriebsrädern des Zug- oder Schlepperfahrzeuges arbeiten, besonders zweckmäßig, da der Haltestiel 103 bei dieser Anordnung die Gewindespindel 107 vor dem von den Antriebsrädern des Zug- oder Schlepperfahrzeuges aufgeworfenen Schmutz schützt.

Anstelle der in den Fig. 23 und 24 dargestellten Handkurbeln zur Verstellung der Spindeln 107 können auch um eine zur Spindelachse quer verlaufende Achse klappbare Griffhebel 107' angeordnet sein, wie in den Fig. 17 bis 19 dargestellt ist.

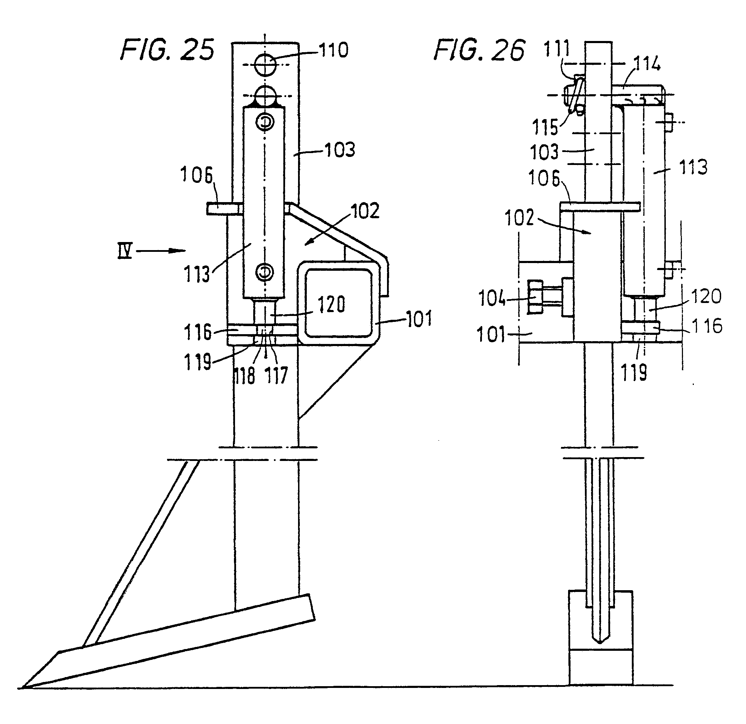

Die Ausführungsform nach den Fig. 25 bis 27 unterscheidet sich von denjenigen nach den Fig. 23 und 24 im wesentlichen dadurch, daß anstelle einer Verstellspindel 107 ein hydraulisch betätigbares Teleskopaggregat 113 angeordnet ist. Dabei ist an einem Ende dieses Aggregates 113 ein Zapfenteil 114 vorgesehen, welches wiederum in ein Loch 110 am Haltestiel 103 einschiebbar und mittels eines Klappsteckers 111 sicherbar ist.

Das vom Zapfenteil 114 abgewandte Ende des Teleskopaggregates 113 ist auf Zug und Druck mit einer Lagerplatte 116 verbunden, welche ihrerseits am rahmenfesten Teil 101 bzw. am Aufnahmeteil 102 angeordnet ist.

In der Lagerplatte 116 ist eine zur Seite hin geöffnete schlitzartige Ausnehmung 117 angeordnet, in die das untere Ende des Teleskopaggregates 113 von der Seite her mit einem Bereich 118 mit entsprechend geringerem Querschnitt eingeschoben werden kann, so daß die an den Bereich 118 anschließenden Teile 119 und 120 mit größerem Querschnitt die Ränder der Ausnehmung 117 auf der Ober- bzw. Unterseite der Lagerplatte 116 umgreifen.

Nach Entfernen des Klappsteckers 111 kann das Teleskopaggregat mit seinem Zapfenteil 114 aus dem Loch 110 und mit seinem Bereich 118 am unteren Ende aus der Ausnehmung 117 der Lagerplatte herausgezogen werden. Somit ist eine Demontage des Teleskopaggregates 113 in einfachster Weise möglich.

Die in den Figuren 23 bis 27 dargestellte Spannschraube 104 kann gegebenenfalls, insbesondere wenn die Höhenverstellung der Haltestiele 103 mit Teleskopaggregaten 113 erfolgt, durch hydraulisch oder pneumatisch betätigbare Spannelemente ersetzt werden. Damit ist eine Betätigung der Höhenverstellung auch von einer entfernt angeordneten Bedienungsstelle für die Hydraulik bzw. Pneumatik möglich.

Außerdem können bei hydraulischer bzw. pneumatischer Betätigung mehrere Haltestiele 103 und daran angeordnete Bodenbearbeitungswerkzeuge gemeinsam verstellt werden.

Die hydraulische Verstellung ist vor allem für besonders tief arbeitende Bodenbearbeitungswerkzeuge vorteilhaft, welche in diesem Falle zur Erleichterung von Wendemanövern oder beim Transport des Geräteverbundes auf schlechten Wegen schnell angehoben und danach wiederum schnell in die gewünschte Arbeitsposition abgesenkt werden können.

Zur Kontrolle der jeweiligen Höheneinstellung können an den Haltestielen 103 Markierungen 121 angeordnet sein, welche mit einem Rand der Aufnahmeteile 102 zusammenwirken.

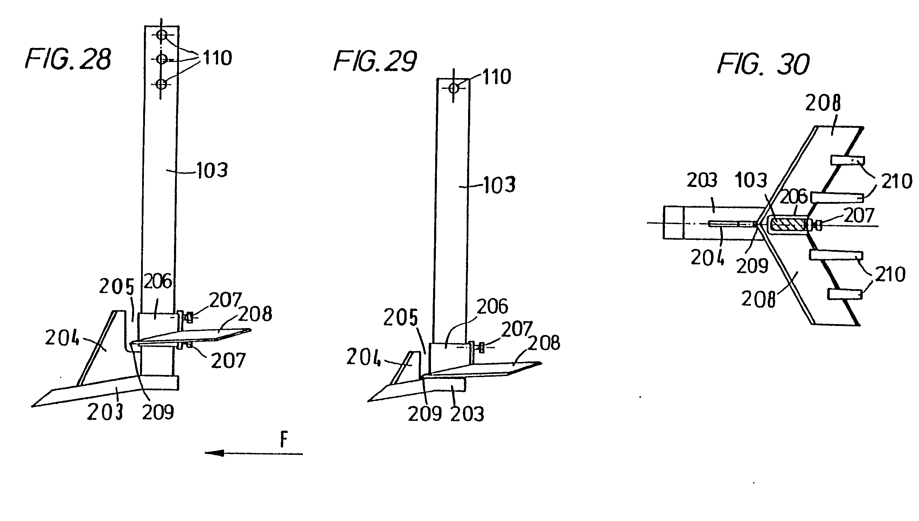

Die bevorzugt an den Haltestielen 103 angeordneten Scharwerkzeuge sind in den Figuren 28 bis 30 genauer dargestellt.

Gemäß Fig. 28 ist am unteren Ende des Haltestieles 103 ein Bodenmeißel 203 angeordnet, welcher im wesentlichen aus einem in Draufsicht gesehen rechteckigen Blech besteht, welches in der dargestellten Weise unter einem Anstellwinkel in Fahrtrichtung F des Gerätes nach vorn schräg unten abgewinkelt ist und an seiner in Fahrtrichtung F weisenden Vorderkante keilförmig zugespitzt ist, indem die Oberseite des Bodenmeißels 203 im vorderen Bereich entsprechend abgeschrägt ist.

Auf der Oberseite des Bodenmeißels 203 ist ein Abweiserteil 204 angeschweißt, welches zusätzlich mit dem Haltestiel 103 an dessen mit dem Bodenmeißel 203 verbundenen Ende verschweißt ist, so daß die Festigkeit der Verbindung zwischen Bodenmeißel 203 und Haltestiel 103 entsprechend erhöht wird. Das aus einem stabilen Blech bestehende Abweiserteil 204 besitzt eine in Fahrtrichtung F weisende Vorderkante, welche nach vorn schräg unten verläuft. Zwischen dem Haltestiel 103 und dem Abweiserteil 204 ist ein nach oben offener Abstandsraum 205 vorgesehen, welcher aufgrund der Verschweißung des Abweiserteiles 204 mit dem Haltestiel 103 in einer gewissen Entfernung oberhalb des Bodenmeißels 203 endet.

Auf dem Haltestiel 103 ist eine Hülse 206 mit Rechteckquerschnitt verschiebbar und mittels Klemmschrauben 207 verspannbar angeordnet, welche in Gewindebohrungen bzw. -buchsen an der entgegen der Fahrtrichtung F nach rückwärts weisenden Seite der Hülse 206 eingesetzt sind.

An der Hülse 206 sind V-förmig zueinander angeordnete Schälmesser 208 beidseitig des Haltestieles 103 angeschweißt, deren Vorder- und Hinterkanten etwa parallel zueinander und deren Enden etwa parallel zur Fahrtrichtung F ausgerichtet sind (vgl. Fig. 30). Die Schälmesser 208 sind an der Hülse 206 unter einem Anstellwinkel angeordnet, welcher etwa dem Anstellwinkel des in Fahrtrichtung F nach vorn über den Haltestiel 103 hinausragenden Teiles des Bodenmeißels 203 entspricht. Aufgrund des Abstandsraumes 205 können die Schälmesser 208 mit ihrer Spitze 209 bei entsprechender Verstellung der Hülse 206 am Haltestiel 103 hinter dem Abweiserteil 204 angeordnet werden.

Bei der Bodenbearbeitung werden die Schälmesser 208 mit mehr oder weniger großem Abstand oberhalb des Bodenmeißels 203 befestigt. Dabei arbeiten die Schälmesser 208 in der Regel im garen Boden, welcher vom Untergrund horizontal abgeschält und unter Zerkleinerung angehoben sowie hinter den Schälmessern 208 in die Zinken des Zinkenrotors 1 (vgl. Fig. 17) geworfen wird. Der Bodenmeißel 203 reißt den tieferen Untergrund auf, so daß insbesondere die Dränage verbessert und auch tiefe Bodenschichten gelockert werden.

Das in Fig. 28 dargestellte Werkzeug ist somit vor allem für schwere Böden vorgesehen.

In Fig. 29 ist ein ähnliches Werkzeug für leichtere Böden dargestellt. Dieses unterscheidet sich vom Werkzeug nach Fig. 28 im wesentlichen durch geringere Abmessungen des Bodenmeißels 203 sowie des Abweiserteiles 204, welches darüber hinaus lediglich auf der Oberseite des Bodenmeißels 203 derart angeschweißt ist, daß sich der Abstandsraum 205 bis zum Bodenmeißel 203 erstreckt. Damit lassen sich die Schälmesser 208 gegebenenfalls in etwa gleicher Ebene mit dem Bodenmeißel 203 anordnen, wie es in Fig. 29 dargestellt ist. Eine derartige Einstellung kann bei leichten Böden erwünscht sein, da Bodenmeißel 203 und Schälmesser 208 in etwa gleicher Höhe im garen Boden arbeiten und damit eine unerwünschte Durchmengung des Bodens mit lockerem, insbesondere sandhaltigem Untergrund verhindert werden kann.

Nach Fig. 30 können an den Hinterkanten der Schälmesser 208 stab- bzw. streifenförmige Fortsätze 210 kammartig angeordnet sein. Dadurch wird das von den Schälmessern 208 vom Untergrund abgeschälte und angehobene Erdreich noch intensiver zerkleinert. Die Anordnung derartiger Fortsätze 210 ist insbesondere für sehr feuchte Böden mit lehmhaltiger Konsistenz vorgesehen. Derartige Böden besitzen einen vergleichsweise starken inneren Zusammenhalt, d. h. die Schälmesser 208 heben gegebenenfalls hautartige Bodenstreifen ab, welche durch die Fortsätze 210 nachfolgend intensiv zerrissen werden.

Die dargestellten Werkzeuge sind zum Einebnen der Spurrillen, wie sie vom Schleppfahrzeug des die Werkzeuge tragenden Geräteverbundes gegebenenfalls hinterlassen werden, besonders geeignet. Dazu werden die Haltestiele 103 der im Bereich der Spurrillen arbeitenden Werkzeuge tiefer als bei seitlich der Spurrillen arbeitenden Werkzeugen angeordnet, so daß der Bodenmeißel 203 im Spurrillenbereich besonders tief eingestellt ist. Die Schälmesser 208 werden dagegen — unabhängig davon, ob sie im Spurrillenbereich oder daneben arbeiten — bei allen Werkzeugen auf gleiche Höhe eingestellt.

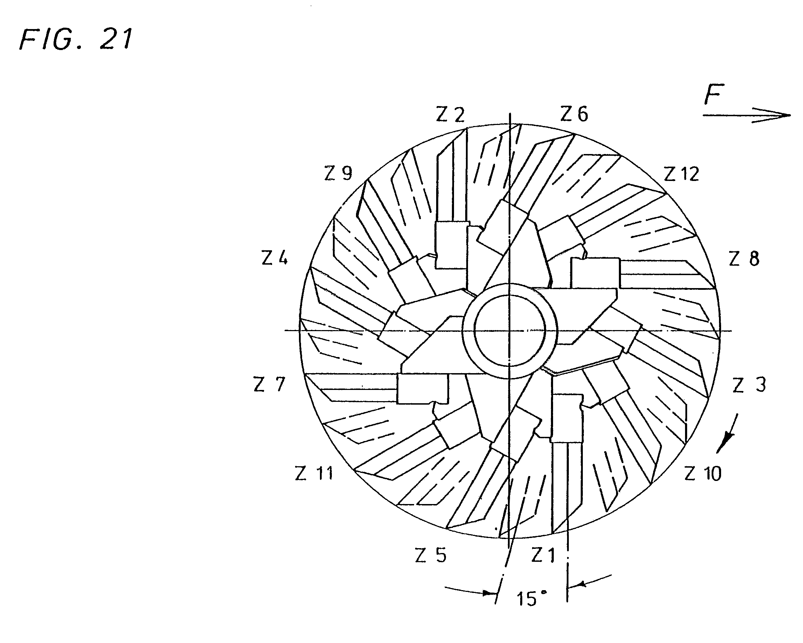

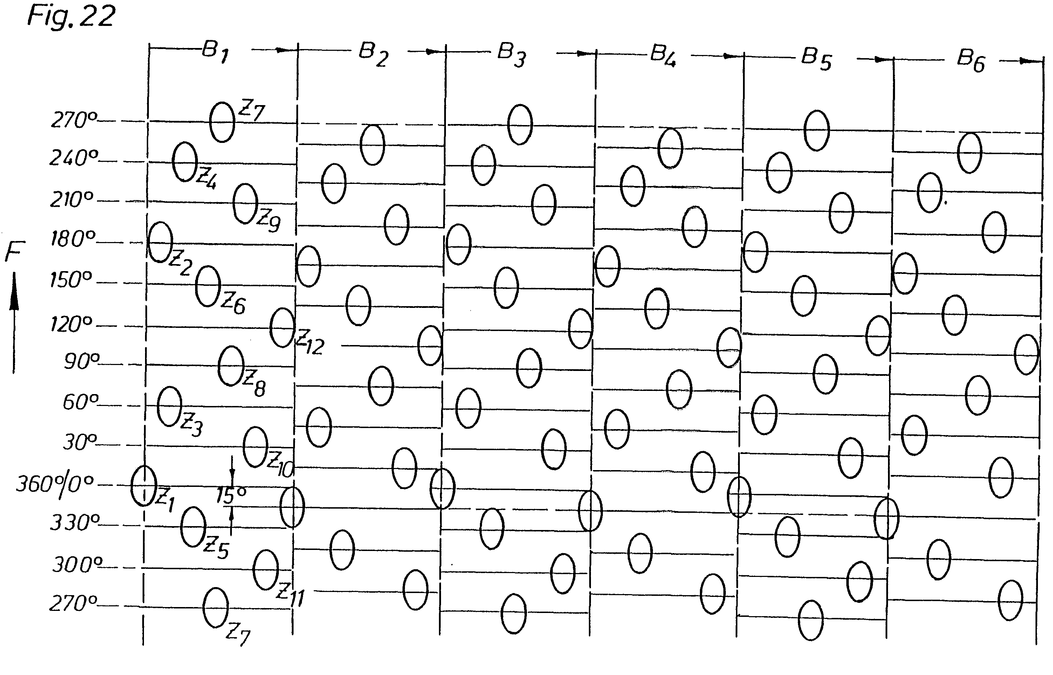

In den Figuren 21 und 22 ist eine bezüglich Montage und Laufruhe des Zinkenrotors besonders günstige Anordnung der Zinken dargestellt. Jeweils zwölf Zinken bilden eine Gruppe. Dabei sind die Zinken der in Achsrichtung vordersten Gruppe in Fig. 21 mit $Z_1$ bis $Z_{12}$ bezeichnet. Die in Achsrichtung nächstfolgende Zinkengruppe ist gegenüber der ersteren Gruppe um ca. 15° versetzt angeordnet, während die darauffolgende Gruppe wiederum ohne Versetzung angeordnet ist usw. In Achsrichtung aufeinanderfolgende Zinken haben voneinander gleichen Abstand, wobei jede Zinke in einer eigenen Radialebene des Zinkenrotors angeordnet ist. Läßt man den Zinkenrotor 101 auf einer ebenen Fläche in Fahrtrichtung F abrollen, so bilden die Einstichpunkte der Zinkenspitzen das in Fig. 22 dargestellte Muster, dabei sind den Einstichpunkten des Blockes $B_1$ jeweils die entsprechenden Bezugszeichen $Z_1$ bis $Z_{12}$ der zugehörigen Zinken zugeordnet. Die in Achsrichtung folgenden Zinkenblöcke $B_2$ bis $B_6$ erzeugen gleichartige Einstichsmuster wie der Block $B_1$, die Einstichspunkte sind bei den Blöcken $B_2$, $B_4$ und $B_6$ lediglich entsprechend der um 15° versetzten Anordnung dieser Blöcke gegenüber dem Block $B_1$ etwas verschoben.

Der Boden setzt dem Einstich der Zinken einen gewissen Widerstand entgegen, so daß jeweils eine Kraft erzeugt wird, welche den Zinkenrotor 101 anzuheben sucht. Bei der dargestellten Zinkenanordnung treten derartige Kräfte bezüglich der Längserstreckung der Zinkenrotorachse außerordentlich gleichmäßig verteilt auf, so daß — im Gegensatz zu einer schraubenartigen Anordnung der Zinken — keine nennenswerten Momente auftreten können, welche den Zinkenrotor zu Taumelbewegungen bezüglich einer zur Fahrtrichtung F parallelen Achse anzuregen suchen.

**Patentansprüche**

1. Landwirtschaftlicher Geräteverbund zur Ankopplung, insbesondere mittels Dreipunktgestänges (7), an ein Zug- bzw. Schlepperfahrzeug (43), insbesondere zur Bodenbearbeitung, mit vorauslaufendem, gegebenenfalls kombiniertem Gerät und nachlaufender Geräteanordnung bzw. -kombination, die mittels eines Hubwerkes (6) mit Unter- und Obergestänge (15, 16), welches zwischen einem Trägerbock (9) über dem vorauslaufenden Gerät und einem mit der nachlaufenden Geräteanordnung bzw.

-kombination koppelbaren Tragteil (17) nach Art eines Lenkergevierts — in Seitenansicht gesehen vorzugsweise parallelogrammartig — angeordnet ist, aus einer hinter das vorauslaufende Gerät abgesenkten Arbeitslage in eine über das vorauslaufende Gerät angehobene Transportstellung anhebbar ist, dadurch gekennzeichnet, daß als Trägerbock ein das vorauslaufende Gerät austauschbar tragender, mit dem Zug- bzw. Schleppfahrzeug, vorzugsweise über das Dreipunktgestänge (7), koppelbarer bockartiger Rahmen (5) mit mehreren, vorzugsweise vorgefertigten, für unterschiedliche Geräteeinheiten einschließlich des vorauslaufenden Gerätes (1, 2) nutzbaren Anschlußpunkten (14, 19) angeordnet ist, an denen unter anderem sowohl das an einem oberen Teil (10) des bockartigen Rahmens (5) angelenkte Obergestänge (16) als auch das an einem unteren Teil (8) des bockartigen Rahmens (5) angelenkte Untergestänge (15) angeordnet sind, welches aus zwei Längslenkereinheiten (18) besteht, die mittels Querverbindung (21), welche mit Abstand von den rahmenseitigen Enden der Längslenkereinheiten (18) und vorzugsweise — zumindest im Mittelbereich des Geräteverbundes — oberhalb einer die Längslenkereinheiten (18) enthaltenden Ebene angeordnet ist, zu einer verwindungssteifen Hubschwingeneinheit zusammengefaßt sind.

2. Geräteverbund nach Anspruch 1, dadurch gekennzeichnet, daß die Hubschwingeneinheit (18, 21) in Draufsicht H- oder X-förmig mit bezüglich der Längserstreckung außermittigtragteilseitig angeordneter Querverstrebung (21) bzw. Querverbindung ausgebildet ist, welche vorzugsweise mit dem Obergestänge (16) als Anschlag zur Begrenzung der Transportstellung (Fig. 11) zusammenwirkt.

3. Geräteverbund nach einem der Ansprüche 1 und 2, dadurch gekennzeichnet, daß die rahmenseitige Gelenkachse des Obergestänges (16) gegenüber der rahmenseitgen Gelenkachse (20) der Hubschwingeneinheit (18, 21) eine vertikal nach oben und in Fahrtrichtung (F) nach vorn versetzte Lage hat, wobei der horizontale Abstand ungefähr einem Drittel des vertikalen Abstandes entspricht.

4. Geräteverbund nach einem der Ansprüche 1 bis 3, dadurch gekennzeichnet, daß der Hubbereich des Hubwerkes (6) bei angekoppelter zapfwellen- bzw. gelenkwellengetriebener Geräteanordnung bzw. -kombination (3) und montierter Gelenk- bzw. Zapfwelle (33) entsprechend deren zulässigem Knickwinkel — z. B. mittels einer Kette (36), die einerseits an einem rahmenfesten Punkt und andererseits mit Abstand von diesem Punkt in Längsrichtung des Kombinationsgerätes im Bereich der hinteren, tragteilseitigen Schwenkachse des Obergestänges (16) einhängbar bzw. festlegbar ist — auf einen Bereich zwischen der Arbeitslage (Fig. 1) und einer für Lenkmanöver nutzbaren Aushebelage (Fig. 3) beschränkbar ist, in der die noch inter dem vorauslaufenden Gerät (1, 2) befindliche Geräteanordnung bzw. -kombination (3, 4) keine Bodenberührung hat.

5. Geräteverbund nach einem der Ansprüche 1 bis 4, dadurch gekennzeichnet, daß ein Kolben-Zylinder-Aggregat (22) zum Antrieb des Hubwerkes (6) im wesentlichen — in der Arbeitslage zugeordneter Stellung des Hubwerkes (6) — oberhalb des Obergestänges (16) an einem oberhalb der rahmenseitigen Schwenkachse des Obergestänges (16) angeordneten Anschlußpunkt bzw. an entsprechend nebeneinander angeordneten Anschlußpunkten sowie am Obergestänge (16) angelenkt ist, wobei durch eine Langlochanordnung (23) am rahmenseitigen und/oder obergestängeseitigen Gelenk ein Höhenspiel des Hubwerkes (6) zugelassen ist.

6. Geräteverbund nach einem der Ansprüche 1 bis 5, dadurch gekennzeichnet, daß am Tragteil (17), welches seine Orientierung bezüglich Vertikalrichtung im wesentlichen in allen Stellungen des Hubwerkes (6) beibehält, zur Anordnung der nachlaufenden Geräteanordnung bzw. -kombination (3, 4, 45, 48 bis 52) mit Abstand voneinander in Gerätequerrichtung nach oben geöffnete Hakenelemente (29) angeordnet sind, deren Öffnungen — in Seitenansicht gesehen — mittels pendelartiger, durch Feder- oder vorzugsweise Schwerkraft in Schließrichtung beaufschlagter Sperrglieder (32) sperrbar sind, welche beim Einhängen der Geräteanordnung bzw. -kombination (3, 4, 45, 48 bis 52) auslenkbar sind und vorzugsweise die Geräteanordnung bzw. -kombination (3, 4, 45, 48 bis 52) in den Hakenelementen (29) nahezu ohne Höhenspiel gegenüber dem Tragteil (17) sichern.

7. Geräteverbund nach einem der Ansprüche 1 bis 6, dadurch gekennzeichnet, daß das in Transportstellung (Fig. 11) entgegen der Arbeitsstellung über eine Totpunktlage hinausgeschwenkte Hubwerk (6) mittels einer manuell aus ihrer Riegelstellung aushebbaren, am Obergestänge (16) angeordneten, vorzugsweise allein durch Schwerkraft beaufschlagten Sicherheitsklinke (40) sicherbar ist, welche mit einem Rastvorsprung (41) am Tragteil (17) zusammenwirkt, welches in Transportstellung (Fig. 11) des Hubwerkes (6) eine an das dabei aufwärtsgerichtete Obergestänge (16) angenäherte Lage einnimmt.

8. Geräteverbund nach einem der Ansprüche 1 bis 7, dadurch gekennzeichnet, daß als Tragteil (17) an den tragteilseitigen Enden der Hubschwingeneinheit (18, 21) ein U-förmiges Rahmenteil (26 bis 28) schwenkbar angeordnet ist, dessen oberhalb der Hubschwingeneinheit (18, 21) angeordnetes Mittelteil (26) mittels eines gegenüber dem Rahmenteil (26 bis 28) undrehbaren Auslegers (28) am Obergestänge (16) angelenkt ist und dessen an den tragteilseitigen Enden der Hubschwingeneinheit (18, 21) drehgelagerte Schenkelteile (27) an ihren freien Enden Kupplungsorgane, z. B. die Hakenelemente (29) sowie deren Sperrglieder (32), für die nachlaufende Geräteanordnung (3, 4, 45, 48 bis 52) bzw. -kombination aufweisen.

9. Geräteverbund nach einem der Ansprüche 1 bis 8, dadurch gekennzeichnet, daß als nachlaufende Geräteanordnung bzw. -kombination Drillgeräte (3), Granulatstreuer (4), Behälter für Schädlingsbekämpfungs- oder Düngemittel (45), Walzen (49), Hackgeräte, Pflanzgeräte (50) und/oder Dammbildungseinrichtungen (48) austauschbar angeordnet werden können, daß als vorauslaufendes Gerät ein Bodenbearbeitungsgerät mit feststehenden bzw. gefederten Zinken (44, 51, 81) und/oder ein zapfwellengetriebenes Bodenbearbeitungsgerät, z. B. Kreiselegge, Zinkenrotor (1) oder Bodenfräse, austauschbar angeordnet werden können, dessen Getriebe (35) einen Auslaß (34) zur Ankopplung einer Gelenkwelle (33) zum Antrieb einer nachlaufenden Geräteeinheit aufweisen kann, und daß unterhalb der Hubschwingeneinheit (18, 21) ein Bodenbearbeitungsgerät, z. B. eine Krümlerwalze (2), unter Benutzung der entsprechend angeordneten Anschlußpunkte am bockartigen Rahmen (5) austauschbar anbringbar ist.

10. Geräteverbund nach einem der Ansprüche 1 bis 9, dadurch gekennzeichnet, daß die nachlaufende Geräteanordnung bzw. -kombination mit dem Tragteil (17) einerseits an im wesentlichen tragteilfesten unteren Kupplungsorganen (Hakenelemente 29) und andererseits an mindestens einem oberen Verbindungspunkt (65) verbunden ist, welcher in Transportstellung (Fig. 16) in Bezug auf das Tragteil (17) in Fahrtrichtung (F) gegenüber seiner Lage in Arbeitsstellung (Fig. 15) nach vorn verlagert ist, indem vorzugsweise der Verbindungspunkt mit dem Knie (65) einer Kniehebelanordnung (62, 63) verbunden angeordnet ist, deren einer Hebel (62) am Tragteil (17) und deren anderer Hebel (63) am Obergestänge (16) an einem Punkt angelenkt ist, welcher in Arbeitsstellung (Fig. 15) gegenüber dem tragteilseitigen Gelenk des einen Hebels (62) nach rückwärts versetzt ist (Fig. 15, 16).

11. Geräteverbund nach einem der Ansprüche 1 bis 10, dadurch gekennzeichnet, daß vor dem bockartigen Rahmen (5) zu dessen Verlängerung ein Vorschaltrahmen (54) mit Anschlußpunkten für das Dreipunktgestänge (7) anschließbar ist und daß am Vorschaltrahmen (54) bzw. am bockartigen Rahmen (5) im Bereich der für die Unterlenker (7') des Anschluß- bzw. Dreipunktgestänges (7) vorgesehenen Anschlußpunkte desselben (5) eine Querbalkenanordnung (55) befestigbar ist, welche sich zur Anordnung grubberartiger Werkzeuge (56), z. B. solche mit gänsefußartigen Scharblättern, und/oder zur Anordnung vorzugsweise höhenverstellbarer Abstützräder (60) eignet.

12. Geräteverbund nach einem Ansprüche 1 bis 11, dadurch gekennzeichnet, daß in Draufsicht dicht hinter, vorzugsweise unmittelbar hinter den Anschlußpunkten (80) des bockartigen Rahmens (5) für das Anschluß- bzw. Dreipunktgestänge (7) zur Ankopplung an das Zug- bzw. Schlepperfahrzeug ein zapfwellengetriebenes Bodenbearbeitungsgerät — vorzugsweise mit Zinkenrotor (1), welcher in die Fahrt (F) des Gerätes unterstützender Laufrichtung umläuft — angeordnet ist und daß unmittelbar vor dem zapfwellengetriebenen Bodenbearbeitungsgerät (1) im Bereich der unteren seitlichen Anschlußpunkte (80) des bockartigen Rahmens (5) und/oder zu den Geräteaußenseiten hin versetzt den Boden im wesentlichen horizontal abschälende Scharwerkzeuge (81) derart angeordnet sind, daß die abgeschälte Erde in noch angehobenem Zustand zu den Werkzeugen des zapfwellengetriebenen Gerätes (1) gelangt.

13. Geräteverbund nach Anspruch 12, dadurch gekennzeichnet, daß Halterungen bzw. Aufnahmeteile (102) für die Scharwerkzeuge (81) am bockartigen Rahmen (5) im Bereich der seitlichen unteren Anschlußpunkte (80) und/oder seitlich außerhalb des bockartigen Rahmens (5) an vorderen Rahmengliedern des zapfwellengetriebenen Bodenbearbeitungsgerätes (1) und/oder an seitlichen Auslegern (75) des bockartigen Rahmens (5) angeordnet sind, wobei die gegebenenfalls an ihren äußeren Enden mit Rahmengliedern des zapfwellengetriebenen Bodenbearbeitungsgerätes (1) verbundenen Ausleger (75) zwischen ihren einander zugewandten, mit dem bockartigen Rahmen (5) verbundenen Enden für den Durchtritt der Zapfwelle (76) einen dem Querschnitt des bockartigen Rahmens (5) in Vorderansicht etwa entsprechenden Freiraum offenlassen.

14. Geräteverbund mit Zinkenrotor (1), welcher in die Fahrt des Gerätes unterstützender Umlaufrichtung rotiert und dessen an den Außenenden vorzugsweise spitze Zinken vorzugsweise in die Umlaufrichtung weisende, im wesentlichen gerade, keilförmiges Profil aufweisende Schlagkanten besitzen, die in Achsansicht des Zinkenrotors (1) bezüglich der Umlaufrichtung hinter der Achse des Zinkenrotors angeordnet sind, nach einem der Ansprüche 1 bis 13, dadurch gekennzeichnet, daß die Zinken ($Z_1$ bis $Z_{12}$) je für sich in einer eigenen Radialebene des Zinkenrotors (1) mit in Achsrichtung gleichen Abständen und in Gruppen ($B_1$ bis $B_6$) angeordnet sind, wobei jede Gruppe zwölf in zwölf Radialebenen angeordnete Zinken ($Z_1$ bis $Z_{12}$) umfaßt und die erste, dritte usw. Gruppe ($B_1$, $B_3$, $B_5$ ...) gegenüber der zweiten, vierten usw. Gruppe ($B_2$, $B_4$ ...) um einen Winkel von ca. 15° in Umfangsrichtung des Zinkenrotors (1) versetzt sind, und daß jeweils die in Achsrichtung des Zinkenrotors (1) erste, dritte usw. bis elfte Zinke ($Z_1$, $Z_3$, ..., $Z_{11}$) einer Gruppe gegenüber der jeweils in Achsrichtung folgenden zweiten, vierten usw. bis zwölften Zinke ($Z_2$, $Z_4$, ..., $Z_{12}$) dieser Gruppe um 180° versetzt ist und die dritte Zinke ($Z_3$) um 60°, die fünfte Zinke ($Z_5$) um 330°, die siebte Zinke ($Z_7$) um 270°, die neunte Zinke ($Z_9$) um 210° und die elfte Zinke ($Z_{11}$) um 300° gegenüber der ersten Zinke ($Z_1$) versetzt sind (Fig. 21, 22).

15. Geräteverbund mit Halterungen zur Aufnahme des Haltestieles (103) eines zum Umbrechen, Lockern und/oder Aufreißen od. dgl. dienenden Bodenbearbeitungswerkzeuges (203, 208), z. B. eines grubber- oder gänsefußartigen Scharblattes, mit einem an einem Rahmenteil, einem rahmenfesten Teil od. dgl. — z. B. am bockartigen Rahmen (5) oder an den Auslegern (75) — angeordneten, den Haltestiel (103) in Vertikalrichtung verschiebbar umfassenden Aufnahmeteil (102), einem daran angeordneten Spannorgan (104) zum Feststellen des Haltestieles (103) und einem Verstellorgan (107, 113) zur Höhenverstellung des Haltestieles (103) bei gelöstem Spannorgan (104), nach einem der Ansprüche 1 bis 14, dadurch gekennzeichnet, daß das zwischen einem rahmenfesten Widerlager (112, 116) und einem haltestielseitigen, zusammen mit dem Haltestiel (103) beweglichen Widerlager (108, 114) angeordnete Verstellorgan (107, 113) ein mittels Steckverbindung (109, 114) in einem Loch oder mehreren Löchern (110) am Haltestiel (103) lösbar angeordnetes, haltestielseitiges Widerlagerteil (108, 114) aufweist, welches vorzugsweise oberhalb des Aufnahmeteiles (102) angeordnet ist, so daß der Haltestiel (103) bei Vergrößerung des Abstandes der Widerlager (108, 112, 114, 116) angehoben wird.

16. Geräteverbund nach Anspruch 15, dadurch gekennzeichnet, daß eine als Verstellorgan angeordnete Verstellspindel (107) in einem Gewindeblock (108) gehaltert ist, der mittels eines an ihm angeordneten Zapfens (109), welcher in das Loch bzw. die Lochreihe (110) am Haltestiel (103) einschiebbar ist, mit dem Haltestiel (103) verbindbar ist, und daß das aus dem Gewindeblock (108) herausstehende Ende der Verstellspindel (107) in einer pfannenartigen Vertiefung (112) des rahmenfesten Widerlagers gehaltert ist.

17. Geräteverbund nach einem der Ansprüche 15 und 16, dadurch gekennzeichnet, daß ein als Verstellorgan angeordnetes, pneumatisch oder — vorzugsweise — hydraulisch antreibbares Teleskopaggregat (113) mittels eines an ihm angeordneten, in das Loch bzw. die Lochreihe (110) am Haltestiel (103) einschiebbaren Zapfenteiles (114) mit dem Haltestiel (103) verbindbar ist und daß das vom Zapfenteil (114) abgewandte Ende des Teleskopaggregates (113) mit dem Rahmenteil bzw. dem rahmenfesten Teil auf Zug und Druck lösbar verbindbar ist, indem es vorzugsweise mit einem Bereich (118) geringeren Querschnittes, an den Teile (119, 120) mit größerem Querschnitt anschließen, in eine an einem Ende offene schlitzartige rahmenfeste Ausnehmung (117) einschiebbar ist.

18. Geräteverbund nach einem der Ansprüche 15 bis 17, dadurch gekennzeichnet, daß bei Haltestielen (103), welche hinter Rädern des Schlepp- oder Zugfahrzeuges angeordnet sind, die als Verstellorgane angeordneten Spindeln oder Teleskopaggregate in Fahrtrichtung hinter den Haltestielen (103) angeordnet sind.

19. Geräteverbund nach einem der Ansprüche 15 bis 18, dadurch gekennzeichnet, daß das Spannorgan zum Feststellen des Haltestieles (103) pneumatisch oder — vorzugsweise — hydraulisch betätigbar ist.

20. Geräteverbund mit vorzugsweise vor einem Zinkenrotor (1) angeordneten Scharwerkzeugen mit einem im wesentlichen vertikal angeordneten Haltestiel (103), der an einem Rahmenteil (5) oder rahmenfesten Teil (75) — vorzugsweise höhenverstellbar — anbringbar ist, einem am unteren Ende des Haltestieles (103) unter einem Anstellwinkel in Fahrtrichtung nach vorn unten angeordneten Bodenmeißel (203) sowie beidseitig an den Bodenmeißel etwa V-förmig — in Draufsicht gesehen — anschließenden, mit ähnlichem Anstellwinkel angeordneten breiten Schälmessern (208), nach einem der Ansprüche 1 bis 19, dadurch gekennzeichnet, daß die Schälmesser (208) lösbar und höhenverstellbar — in Sonderfällen auch doppelt oder mehrfach übereinander — am Haltestiel (103) angeordnet sind, vorzugsweise mittels einer auf dem Haltestiel (103) verschiebbar geführten Hülse (206), welche am Haltestiel (103) mittels Klemmschrauben (207) verspannbar ist, die auf einem entgegen der Fahrtrichtung (F) weisenden Bereich der Hülse (206) in einer oder mehreren dort angebrachten Gewindebohrungen bzw. -buchsen angeordnet sind.

21. Geräteverbund nach Anspruch 20, dadurch gekennzeichnet, daß zwischen dem Haltestiel (103) und einem auf der Oberseite des Bodenmeißels (203) vor dem Haltestiel (103) angeordneten, messerartigen — in Fahrtrichtung gesehen — vertikalen Abweiserteil (204), welches vorzugsweise mit in Fahrtrichtung nach schräg vorn unten gerichteter Vorderkante angeordnet ist, ein nach oben offener Abstandsraum (205) für die von den V-förmig angeordneten Schälmessern (208) gebildete Spitze (209) vorliegt, wobei der Abstandsraum (205) bis auf die Oberseite des Bodenmeißels (203) erstreckt sein oder, wenn das Abweiserteil (204) sowohl auf der Oberseite des Bodenmeißels (203) als auch an einem an den Bodenmeißel (203) anschließenden Bereich des Haltestieles (103) befestigt, insbesondere angeschweißt ist, mit Abstand oberhalb des Bodenmeißels (203) enden kann.

22. Geräteverbund nach einem der Ansprüche 20 und 21, dadurch gekennzeichnet, daß an den nach rückwärts weisenden Kanten der Schälmesser (208) in Draufsicht parallel zur Fahrtrichtung (F) ausgerichtete streifen- bzw. stabartige Fortsätze (210) angeordnet sind.

23. Geräteverbund nach einem der Ansprüche 20 bis 22, dadurch gekennzeichnet, daß bei Werkzeugen, welche im Bereich einer Schlepperspur od. dgl. arbeiten, der zugehörige Bodenmeißel (203) tiefer eingestellt ist als die Bodenmeißel der seitlich der Schlepperspur od. dgl. arbeitenden Werkzeuge und das zugehörige Schälmesser (208) auf gleicher Höhe arbeitet wie die Schälmesser der anderen Werkzeuge seitlich der Schlepperspur od. dgl.

24. Geräteverbund nach einem der Ansprüche 1 bis 23, dadurch gekennzeichnet, daß der Zinkenrotor (1) oder eine Kreiselegge als zapfwellengetriebenes Gerät rahmenfest am bockartigen Rahmen (5) angeordnet sind und die übrigen Geräte höhenveränderbar angeordnet bzw. angekoppelt sind.

25. Geräteverbund nach einem der Ansprüche 1 bis 24, dadurch gekennzeichnet, daß unter einem seitlich des Zinkenrotors (1) angeordneten Getriebegehäuse (90) für eine Antriebsübertragung des Zinkenrotors (1) eine kufenförmig nach vorn oben aufgebogene, vorzugsweise Rundprofil aufweisende Stange (91) schräg zur Fahrtrichtung (F) mit zur Geräteaußenseite weisendem Vorderteil angeordnet ist, dessen aufwärtsgerichteter Abschnitt unter Bildung eines offenen Abstandsraumes (92) entfernt vom Getriebegehäuse (90) angeordnet ist.

26. Geräteverbund mit einem vorderes Bodenbearbeitungsgerät tragenden bockartigen, an ein Zug- bzw. Schleppfahrzeug, vorzugsweise mittels Dreipunktgestänges (7), ankoppelbaren Rahmen (5), an dem ein Tragrahmen (12) für weiteres Gerät, z. B. eine Krümlerwalze (2), um eine Querachse schwenkbar angelenkt und mittels einer verstellbaren Abstützung (300) zwischen Tragrahmen (12) und bockartigem Rahmen (5) in unterschiedliche Höhenlagen fest oder federnd einstellbar ist, nach einem der Ansprüche 1 bis 25, dadurch gekennzeichnet, daß als verstellbare Abstützung eine Kniehebelanordnung (300) angeordnet ist, welche durch Federkraft oder — vorzugsweise — Schwerkraft in Richtung einer relativ gestreckten Übertotpunktlage, in der Druckbelastungen aufgenommen werden können, beaufschlagt wird und deren eines Hebelteil als längeneinstellbares Teil, z. B. als Spindel (301) oder teleskopartige Anordnung (302), angeordnet ist (Fig. 17).

27. Geräteverbund mit einem vorderes Bodenbearbeitungsgerät tragenden bockartigen, an ein Zug- bzw. Schlepperfahrzeug, vorzugsweise mittels Dreipunktgestänges (7), ankoppelbaren Rahmen (5), an dem ein Tragrahmen (12) für weiteres Gerät, z. B. eine Krümlerwalze (2), um eine Querachse schwenkbar angelenkt und mittels einer verstellbaren Abstützung (302) zwischen Tragrahmen (12) und bockartigem Rahmen (5) in unterschiedliche Höhenlagen fest oder federnd einstellbar ist, nach einem der Ansprüche 1 bis 25, dadurch gekennzeichnet, daß als verstellbare Abstützung eine teleskopartige Anordnung (302) vorgesehen ist, an deren einem Teil (302") ein verstellbarer Anschlag (312) zur Begrenzung des maximalen Einschubweges der beiden Teile (302', 302") der teleskopartigen Anordnung (302) angeordnet ist und deren Teile (302', 302") miteinander verriegelbar (Riegel 311) oder in Ein- und Ausschubrichtung begrenzt (Schlitze 313, Zapfenteile 314) gegeneinander beweglich sind.

## Claims

1. A combination of agricultural implements for coupling, in particular by means of a three point linkage (7) to a towing or tractor vehicle (43), in particular for working the ground, having a leading implement, which may be a combined implement, and a trailing implement arrangement or combination which can be lifted from a lower working position behind the leading apparatus into a transport position lifted above the leading apparatus by means of a lifting mechanism (6) having upper and lower linkages (15, 16) which is arranged between a carrier structure (9) above the leading implement and a carrier part (17) which can be coupled with the trailing implement arrangement or combination in the manner of a four bar linkage — and which is preferably parallelogram-like as seen in side elevation —, characterised in that a stand-like frame (5) which can be coupled with the towing or tractor vehicle, preferably via the three point linkage (7), and which interchangeably carries the leading implement is provided as the carrier structure and has several preferably preprepared connection points (14, 19) which can be utilized for different implement units including the leading implement (1, 2), with amongst other things the upper linkage (16) which is pivotally connected to an upper part (10) of the stand-like frame (5) and also the lower linkage (15) which is pivoted to a lower part (8) of the stand-like frame (5) being arranged at the connection points (14, 19), with the lower linkage (15) consisting of two longitudinal link units (18) which are combined into a torsionally stiff lifting arm united by means of a transverse connection (21) which is arranged spaced apart from the frame side ends of the longitudinal link units (18) and preferably — at least in the centre region of the implement combination — above a plane containing the longitudinal link units (18).

2. Implement combination in accordance with claim 1, characterised in that the lifting arm unit (18, 21) is constructed to be H- or X-like in plan view with the transverse brace (21) or connection being arranged away from the centre at the carrier part side relative to the longitudinal extent, with the transverse connection preferably cooperating with the upper linkage (16) as an abutment to limit the transport position (Fig. 11).

3. Implement combination in accordance with one of the claims 1 and 2, characterised in that the frame end pivot axis of the upper linkage (16) has a position displaced vertically upwardly and forwardly in the direction of travel (F) relative to the frame end pivot axis (20) of the lifting arm unit (18, 21), with the horizontal spacing corresponding approximately to one third of the vertical spacing.

4. Implement combination in accordance with one of the claims 1 to 3, characterised in that the lifting range of the lifting mechanism (6) is restrictable, when an implement arrangement or combination (3) driven by the power take of shaft or by a universal drive shaft is coupled in position, and the power take of shaft (33) or universal shaft is mounted, in accordance with the maximum permissible deflection angle of the power take of shaft or universal drive shaft, to a region between the working position (Fig. 1) and an elevated position (Fig. 3) which can be used for turning manœuvres and in which the implement arrangement or combination (3, 4) which is still located behind the leading implement (1, 2) does not have any ground contact — for example by means of a chain (36) which can be engaged or fixed at the one end to a fixed frame point and at the other end spaced apart from this point in the longitudinal direction of the combination implement in the region of the rear carrier part side pivot axis of the upper linkage (16).

5. Implement combination in accordance with one of the claims 1 to 4, characterised in that a piston in cylinder unit (22) for driving the lifting mechanism (6) is pivotally connected — in the position of the lifting mechanism (6) associated with the working position — substantially above the upper linkage (16) to a connection point above the frame end pivot axis of the upper linkage (16), or to connection points which are correspondingly arranged alongside one another, and also to the upper linkage (16) ; and in that an elongate slot arrangement (23) at the pivotal connection at the frame end and/or at the upper linkage end permits vertical play of the lifting mechanism (6).

6. Implement combination in accordance with one of the claims 1 to 5, characterised in that upwardly open hook elements (29) which are spaced apart in the transverse direction of the apparatus are arranged on the carrier part (17), which essentially retains its orientation relative to the vertical direction in all positions of the lifting mechanism (6), for the mounting of the trailing implement arrangement or combination (3, 4, 45, 48 to 52), with the openings of the hook elements — as seen in side view — being closable by means of pendulum-like blocking members (32) which are acted on in the closing direction by spring force or preferably by gravity and which can be pivoted away during mounting of the implement arrangement or combination (3, 4, 45, 48 to 52) and which preferably secure the implement arrangement or combination (3, 4, 45, 48 to 52) in the hook elements (29) almost without vertical play relative to the carrier part (17).

7. Implement combination in accordance with one of the claims 1 to 6, characterised in that the lifting mechanism (6) which is pivoted in the transport position (Fig. 11), contrary to the working position, beyond an over dead centre position can be secured by means of a securing pawl (40) which is arranged on the upper linkage (16), which can be lifted manually out of its locking position, which is preferably acted on by gravity alone and which cooperates which a latching projection (41) on the carrier part (17), which in the transport position (Fig. 11) of the lifting mechanism (6) adopts a position approximating to the upwardly directed upper linkage (16).

8. Implement combination in accordance with one of the claims 1 to 7, characterised in that a U-shaped frame part (26 to 28) is pivotally arranged as the carrier part (17) at the carrier part ends of the lifting arm unit (18, 21), with the central part (26) of the U-shaped frame part which is arranged above the lifting arm unit (18, 21) being pivotally connected to the upper linkage (16) by means of a boom (28) which is not rotatable relative to the frame part (26 to 28), and with the limb elements (27) of the U-shaped frame part, which are rotatably mounted at the carrier part ends of the lifting arm unit (18, 21), having coupling members for the trailing implement arrangement (3, 4, 45, 48 to 52) or combination, for example the hook elements (29) and also their locking members (32).

9. Implement combination in accordance with one of the claims 1 to 8, characterised in that drilling implements (3), granulate scatterers (4), containers for pesticides or fertilizers (45), rollers (49), chopping apparatus, planting apparatus (50) and/or bank forming devices (48) can be interchangeably provided as the trailing implement arrangement or combination ; in that a ground working implement with fixed or sprung tynes (44, 51, 81) and/or a power take off shaft driven ground working implement, for example a rotary harrow, rotavator (1) or ground milling device can be interchangeably provided as the leading implement, wherein the transmission (35) of the ground working implement can have an output (34) for coupling on a universal drive shaft (33) for driving a trailing implement unit, and in that a ground working implement, for example a roller tiller (2), can be interchangeably mounted beneath the lifting arm unit (18, 21) utilizing the correspondingly arranged connection points on the stand-like frame (5).

10. Implement combination in accordance with one of the claims 1 to 9, characterised in that the trailing implement arrangement or combination is connected on the one hand with the carrier part (17) at lower coupling members (hook elements 29) which are substantially fixed relative to the carrier part and, on the other hand, at at least one upper connection point (65) which, in the transport position (Fig. 16) is displaced forwardly with reference to the carrier part (17) in the direction of travel (F) relative to its position in the working position (Fig. 15) ; and in that, preferably, the connection point is arranged connected with the knee (65) of a toggle lever arrangement (62, 63) one lever (62) of which is pivotally connected to the carrier part (17) and the other lever (63) of which is pivotally connected to the upper linkage (16) at a point which, in the working position (Fig. 15), is displaced rearwardly relative to the pivot of said one lever (62) at the carrier part end (Figs. 15, 16).

11. Implement combination in accordance with one of the claims 1 to 10, characterised in that a frame (54) with connection points for the three point linkage (7) can be mounted in front of the stand-like frame (5) in order to extend it ; and in that a transverse beam arrangement (55) can be secured to the front frame (54) and/or to the stand-like frame (5) in the region of the connection points provided for the lower links (7') of the mounting or three point linkage (7), with the transverse beam arrangement (55) being suitable for the mounting of grubber-like tools (56), for example tools with plough shares of goose foot shape, and/or for the mounting of preferably vertically adjustable support wheels (60).

16

12. Implement combination in accordance with one of the claims 1 to 11, characterised in that a power take-off shaft driven ground preparation device is arranged in plan view closely behind, and preferably directly behind the connection points (80) of the stand-like frame (5) for the connection linkage or three point linkage (7) for coupling to the towing or tractor vehicle — preferably a ground preparation apparatus with a rotavator (1) which rotates in a direction of travel which assists the travel (F) of the apparatus- ; and in that plough tools which essentially peel the ground away horizontally are arranged directly in front of the power take-off shaft driven ground preparation apparatus (1) in the region of the lower lateral connection points (80) of the stand-like frame (5) and/or displaced towards the outer sides of the apparatus, so that the peeled away earth can reach the tools of the power take-off shaft driven apparatus (1) while still in the elevated state.

13. Implement combination in accordance with claim 12, characterised in that the holders or receiving parts (102) for the plough tools (81) at the stand-like frame (5) are arranged in the region of the lateral lower connection points (80) and/or laterally outside of the stand-like frame (5) at the front frame members of the power take-off shaft driven ground preparation apparatus (1) and/or on lateral outriggers (75) of the stand-like frame (5), with the outriggers (75), which are optionally connected at their outer ends with frame members of the power take-off shaft driven ground preparation apparatus (1) leaving a free space for the passage of the power take-off shaft (76) between their facing ends which are connected to the stand- like frame (5), with the free space corresponding approximately to the cross-section of the stand-like frame (5) in front view.

14. Implement combination with rotavator (1) which rotates in a direction of rotation assisting the travel of the apparatus and the tynes of which, which are preferably pointed at the outer ends, have substantially straight impact edges with a wedge-like profile, preferably point in the direction of rotation and are arranged in the axial view of the rotavator (1) relative to the direction of rotation behind the axis of the rotavator in accordance with one of the claims 1 to 13, characterised in that the tynes ($Z_1$ to $Z_{12}$) are each arranged in an individual radial plane of the rotavator (1) with uniform spacing in the axial direction and in groups ($B_1$ to $B_6$) with each group including twelve tynes ($Z_1$ to $Z_{12}$) arranged in twelve radial planes and with the first, third etc. group ($B_1$, $B_3$, $B_5$...) being displaced through an angle of ca. 15° in the peripheral direction of the rotavator (1) relative to the second, forth etc. group ($B_2$, $B_4$...) ; and in that the first, third, etc. up to the eleventh tyne ($Z_1$, $Z_3$, ..., $Z_{11}$) of one group is displaced in the axial direction of the rotavator (1) relative to the respectively following second, fourth, etc. up to the respectively following second, fourth, etc. up to the twelth tyne ($Z_2$, $Z_4$, ..., $Z_{12}$) of this group by 180° ; and in that the third tyne ($Z_3$) is displaced by 60°, the fifth tyne ($Z_5$) by 330°, the seventh tyne ($Z_7$) by 270°, the ninth tyne ($Z_9$) by 210° and the eleventh tyne ($Z_{11}$) by 300° relative to the first tyne ($Z_1$) (Figs. 21, 22).

15. Implement combination having holders for receiving the holding shafts (103) of a ground preparation tool (203, 208) for the braking up, loosening and/or ripping up or the like of the ground, for example a grubber plough share for a plough share shaped like a goose's foot ; comprising a receiving part (102) which is arranged on a frame part or a part fixed to a frame or the like — for example on the stand-like frame (5) or on the outriggers (75) — and which displaceably surrounds the holding shaft (103) in the vertical direction ; a clamping member (104) arranged on the receiving part (102) for fixing the holding shaft (103) ; and an adjustment member (107, 113) for the vertical adjustment of the holding shaft (103) when the clamping member (104) is released, in accordance with one of the claims 1 to 14, characterised in that the adjustment member (107, 113) is arranged between an abutment (112, 116) fixed to the frame and an abutment (108, 114) at the holding shaft side which is movable with the holding shaft (103) and has a holding shaft side abutment part (108, 114) which is releasably arranged by means of a plug connection (109, 114) in a hole or several holes (110) on the holding shaft (103), with the abutment part (108, 114) preferably being arranged above the receiving part (102) so that the holding shaft (103) is lifted on increasing the spacing of the abutments (108, 112, 114, 116).

16. Implement combination in accordance with claim 15, characterised in that an adjustment spindle (107) arranged as an adjustment member is held in a threaded block (108) which can be inserted by means of a spigot (109) arranged thereon into the hole or the row of holes (110) at the holding shaft (103), and can be connected with the holding shaft (103) ; and in that the end of the adjustment spindle (107) projecting out of the threaded block (108) is mounted in a panlike recess (112) of the abutment fixed to the frame.

17. Implement combination in accordance with one of the claims 15 and 16, characterised in that a pneumatically or — preferably — hydraulically driven telescope unit (113) provided as the adjustment member can be connected with the holding shaft (103) by means of a spigot part (114) arranged on the telescope unit which can be inserted into the hole or row of holes (110) on the holding shaft (103) ; and in that the end of the telescope unit (113) remote from the spigot part (114) can be releasably connected with the frame part, or with a part fixed to the frame so that it can carry both tension and compression, in that it can be inserted into a slot-like recess (117) fixed relative to the frame and open at one end, preferably by means of a region (118) of smaller cross-section which is adjoined by parts (119, 120) with a larger cross-section.

18. Implement combination in accordance with one of the claims 15 to 17, characterised in that with holding shafts (103) which are arranged behind wheels of the towing or tractor vehicle the spindle or telescope units which are provided as adjustment members are arranged in the direction of travel behind the holding shafts (103).

19. Implement combination in accordance with one of the claims 15 to 18, characterised in that the clamping member is pneumatically or — preferably — hydraulically actuatable to fix the holding shafts (103).

20. Implement combination with plough tools which are arranged preferably in front of a rotavator (1) and which have a substantially vertically arranged holding shaft (103) which can be mounted — preferably vertically adjustably — on a frame part (5) or on a part (75) fixed to the frame, a ground chisel (203) arranged at the bottom at the lower end of the holding shaft (103) at a forwardly inclined angle of attack in the direction of travel, and also with broad peeling blades (208) which are arranged with a similar angle of attack and which adjoin the ground chisel on both sides in approximately V-shaped manner — as seen in plan view — in accordance with one of the claims 1 to 19, characterised in that the peeling blades (208) are releasably and vertically adjustably arranged on the holding stem (103) — in special cases also doubly or multiply above one another — preferably by means of a sleeve (206) which is displaceably guided on the holding stem (103) and which can be clamped to the holding stem (103) by means of clamping screws (207) which are arranged in a region of the sleeve (206) which faces away from the direction of travel (F) in one or more threaded bores or threaded sleeves which are mounted there.

21. Implement combination in accordance with claim 20, characterised in that an upwardly open clearance space (205) for the tip (209) formed by peeling blades (208), which are arranged in a V-shape, is present between the holding shaft (103) and a vertical (as seen in the direction of travel), knife-like deflector part (204) mounted on the upper side of the ground chisel (203) in front of the holding shaft (103), wherein the clearance space (205) extends to the upper side of the ground chisel (203) or, if the deflector part (204) is secured and in particular welded to both the upperside of the ground chisel (203) and also to a region of the holding shaft (103), can terminate at a distance above the ground chisel (203).

22. Implement combination in accordance with one of the claims 20 and 21, characterised in that strip-like or rod-like projections (210) are arranged on the rearwardly directed edges of the peeling blades (208) parallel to the direction of travel as seen in plan view.

23. Implement combination in accordance with one of the claims 20 to 22, characterised in that with tools which operate in the region of a track of the tractor or the like the associated ground chisel (203) is set deeper than the ground chisels of the tools which operate to the side of the track of the tractor or the like ; and the associated peeling blade (208) operates at the same level as the peeling blades of the other tools to the side of the track of the tractor or the like.

24. Implement combination in accordance with one of the claims 1 to 23, characterised in that the rotavator (1) or a rotary harrow are arranged fixed to the stand-like frame (5) as a power take-off shaft driven apparatus ; and in that the remaining apparatus is vertically adjustably arranged or coupled on.

25. Implement combination in accordance with one of the claims 1 to 24, characterised in that a bar (91) having a runner-like preferably round section which is bend upwardly at the front is arranged beneath a transmission housing (90) disposed at the side of the rotavator (1) for a drive transmission of the rotavator (1), and is inclined to the direction of travel (F), with its front part pointing towards the outside of the apparatus, with an upwardly directed section of the front part being arranged spaced from the transmission housing (90) while forming an open clearance space (92).

26. Implement combination comprising a front stand-like frame (5) which carries a front ground preparation apparatus and which can be coupled to a towing or tractor vehicle, preferably by means of a three point linkage (7), wherein a carrier frame (12) for further apparatus, for example a roller tiller (2), can be pivotally mounted about a transverse axle to the stand-like frame (5) and can be fixedly or resiliently adjusted in different vertical positions by means of an adjustable support (300) between the carrier frame (12) and the stand-like frame (5), in accordance with one of the claims 1 to 25, characterised in that a toggle lever arrangement (300) is provided as the adjustable support which is loaded by spring force or — preferably — gravity in the direction of a relatively stretched over-dead-centre position, in which pressure loads can be accommodated ; and in that one of the lever parts of the toggle lever arrangement is arranged as a longitudinally adjustable part, for example a spindle (301) or a telescopic arrangement (302) (Fig. 17).

27. Implement combination comprising a front stand-like frame (5) which carries a front ground preparation apparatus and which can be coupled to a towing or tractor vehicle, preferably by means of a three point linkage (7), wherein a carrier frame (12) for further apparatus, for example a roller tiller (2), can be pivotally mounted about a transverse axle to the stand-like frame (5) and can be fixedly or resiliently adjusted in different vertical positions by means of an adjustable support (300) between the carrier frame (12) and the stand-like frame (5), in accordance with one of the claims 1 to 25, characterised in that a telescopic arrangement (302) is provided as the adjustable support with an adjustable abutment (302) being provided on one part (302″) of the telescopic arrangement to limit the maximum insertion path of the two parts (302′, 302″) of the telescope-like arrangement (302), wherein the parts (302', 302") of the telescope-like arrangement can be locked with one another (locking bar 311) or are movable relative to one another by limited amount in the insertion and extension direction (slots 313, spigot parts 314).

## Revendications

1. Combinaison d'appareils agricoles à accoupler, en particulier au moyen d'un attelage trois points (7), à un tracteur ou à un véhicule remorqueur (43), en particulier pour le travail du sol, comportant un appareil, éventuellement combiné, disposé en avant et un appareil ou une combinaison d'appareils disposés en arrière, que l'on peut soulever pour passer d'une position de travail, abaissée en dessous de l'appareil disposé en avant, à une position de transport élevée au-dessus de l'appareil disposé en avant, au moyen d'un dispositif de relevage (6) comprenant une tringle inférieure et une tringle supérieure (15, 16) qui sont disposées entre un portique support (9), situé au-dessus de l'appareil disposé en avant, et un support (17) qui peut être accouplé à l'appareil, ou à la combinaison d'appareils, disposé en arrière, à la façon d'un carré articulé — de préférence en forme de parallélogramme vu latéralement —, caractérisée en ce que, comme portique support, est disposé un châssis (5) en forme de portique qui porte, avec possibilité d'échange, l'appareil disposé en avant, qui peut s'accoupler au tracteur ou au véhicule remorqueur, de préférence par l'intermédiaire de l'attelage trois points (7) et qui présente plusieurs points d'attache (14, 19), de préférence préfabriqués, que l'on peut utiliser pour différents ensembles d'appareils, y compris pour l'appareil disposé en avant (1, 2) et auxquels sont accrochés, entre autres, aussi bien la tringle supérieure (16) articulée à une partie supérieure (10) du châssis en forme de portique (5), que la tringle inférieure (15) qui est articulée à une partie inférieure (8) du châssis en forme de portique (5) et qui est constituée de deux bras longitudinaux (18) qui sont regroupés, pour constituer un ensemble de levage et de pivotement rigide en torsion, au moyen d'une entretoise (21) disposée à une certaine distance des extrémités, côté châssis, des bras longitudinaux (18) et de préférence — au moins dans la zone médiane de la combinaison d'appareils — au-dessus d'un plan contenant les bras longitudinaux (18).

2. Combinaison d'appareils selon la revendication 1, caractérisée en ce que l'ensemble de levage et de pivotement (18, 21) a, en vue de dessus, la forme d'un H ou d'un X comprenant une entretoise (21) ou liaison transversale dont la position est excentrée, du côté du support, par rapport à la disposition longitudinale et qui collabore de préférence avec la tringle supérieure (16) comme butée de limitation de la position de transport (figure 11).

3. Combinaison d'appareils selon l'une des revendications 1 et 2, caractérisée en ce que l'axe d'articulation, côté châssis, de la tringle supérieure (16) a, par rapport à l'axe d'articulation, côté châssis, (20) de l'ensemble de levage et de pivotement (18, 21), une position décalée verticalement vers le haut et vers l'avant dans le sens de la marche (F), étant précisé que le décalage horizontal correspond à peu près au tiers du décalage vertical.

4. Combinaison d'appareils selon l'une des revendications 1 à 3, caractérisée en ce que, lorsque l'appareil, ou la combinaison d'appareils (3), entraîné par la prise de force ou par l'arbre articulé est accouplé, et que l'arbre articulé ou la prise de force (33) est monté, la course du dispositif de levage (6) peut être limitée, en correspondance avec son angle de brisure autorisé, — par exemple au moyen d'une chaîne (36) que l'on peut suspendre ou fixer d'une part à un point fixe par rapport au châssis et d'autre part à une certaine distance de ce point dans la direction longitudinale de l'appareil de la combinaison, au voisinage de l'axe de pivotement arrière, côté support, de la tringle supérieure (16) — à une zone située entre la position de travail (figure 1) et une position de dégagement (figure 3) qui peut s'utiliser pour manœuvrer dans un virage et dans laquelle l'appareil, ou la combinaison d'appareils (3, 4) qui se trouve encore derrière l'appareil disposé en avant (1, 2) n'a aucun contact avec le sol.

5. Combinaison d'appareils selon l'une des revendications 1 à 4, caractérisée en ce qu'un vérin (22) destiné à l'entraînement du dispositif de levage (6) est articulé essentiellement — dans la position du dispositif de levage (6) correspondant à la position de travail — au-dessus de la tringle supérieure (16) à un point d'attache disposé au-dessus de l'axe de pivotement, côté châssis, de la tringle supérieure (16) ou à des points d'attache disposés convenablement l'un à côté de l'autre, ainsi qu'à la tringle supérieure (16), étant précisé qu'un jeu en hauteur du dispositif de relevage (6) est autorisé par une lumière (23) sur l'articulation côté châssis et/ou côté tringle supérieure.

6. Combinaison d'appareils selon l'une des revendications 1 à 5, caractérisée en ce que sur le support (17), qui conserve essentiellement, dans toutes les dispositions du dispositif de relevage (6), son orientation par rapport à la direction verticale, sont prévus, pour permettre de disposer l'appareil ou la combinaison d'appareils disposé en arrière (3, 4, 45, 48 à 52) des crochets (29) ouverts vers le haut, situés à une certaine distance l'un de l'autre dans la direction transversale de l'appareil et dont les ouvertures — vu de côté — peuvent être verrouillées au moyen d'éléments de verrouillage (32) du type pendulaire, qui sont sollicités en direction de la fermeture par la force d'un ressort ou de préférence par la gravité, qui, lorsque l'on suspend l'appareil ou la combinaison d'appareils (3, 4, 45, 48 à 52) peuvent être déviés et qui, de préférence, maintiennent l'appareil ou la combinaison d'appareils (3, 4, 45, 48 à 52) dans les crochets (29) presque sans jeu en hauteur par rapport au support (17).

7. Combinaison d'appareils selon l'une des revendications 1 à 6, caractérisée en ce que le dispositif de relevage (6), après avoir pivoté au-delà d'une position de point mort en position de transport (figure 11), en sens opposé à la position de travail, peut être verrouillé au moyen d'un cliquet de sécurité (40) que l'on peut extraire manuellement de sa position de verrouillage, qui est disposé sur la tringle supérieure (16), qui est sollicité de préférence uniquement par la gravité et qui collabore avec une saillie de crantage (41) prévue sur le support (17) qui, en position de transport (figure 11) du dispositif de relevage (6), prend une position qui le rapproche de la tringle supérieure (16) alors dirigée vers le haut.

8. Combinaison d'appareils selon l'une des revendications 1 à 7, caractérisée en ce que comme support (17) est disposée, avec possibilité de pivotement, aux extrémités, côté support, de l'ensemble de levage et de pivotement (18, 21), une pièce en forme de U formant châssis (26 à 28), dont la partie médiane (26), disposée au-dessus de l'ensemble de levage et de pivotement (18, 21), est articulée, au moyen d'une console (28) qui ne peut pas tourner par rapport à la pièce formant châssis (26 à 28), à la tringle supérieure (16) et dont les ailes (27), qui tourillonnent aux extrémités, côté support, de l'ensemble de levage et de pivotement (18, 21), présentent, à leurs extrémités libres, des organes d'accouplement, par exemple les crochets (29) ainsi que leurs éléments de verrouillage (32) pour l'appareil (3, 4, 45, 48 à 52), ou la combinaison d'appareils disposé en arrière.

9. Combinaison d'appareils selon l'une des revendications 1 à 8, caractérisée en ce que, comme appareil, ou combinaison d'appareils disposé en arrière, on peut disposer, avec possibilité de les échanger, des semoirs (3), des distributeurs de granulats (4), des récipients pour des produits pesticides ou pour des engrais (45), des rouleaux (49), des houes, des plantoirs (50) et/ou des dispositifs de formation de billons pour semis ; en ce que, comme appareil disposé en avant, on peut disposer, avec possibilité de les échanger, un appareil pour travailler le sol avec des dents rigides ou souples (44, 51, 81) et/ou un appareil pour travailler le sol entraîné par la prise de force, par exemple une herse rotative, un rotor à dents (1) ou une fraise, dont le mécanisme d'entraînement (35) peut présenter une sortie (34) pour accoupler un arbre articulé (33) pour entraîner un appareil disposé en arrière ; et en ce qu'en dessous de l'ensemble de levage et de pivotement (18, 21) on peut rapporter, avec possibilité d'échange, un appareil de travail du sol, par exemple un rouleau émotteur (2), en utilisant les points d'attache appropriés disposés sur le châssis du type portique (5).

10. Combinaison d'appareils selon l'une des revendications 1 à 9, caractérisée en ce que l'appareil, ou la combinaison d'appareils, disposé en arrière est relié au support (17), d'une part à des organes inférieurs d'accouplement essentiellement fixés par rapport au support (crochets 29), et d'autre part à au moins un point supérieur de liaison (65) qui, en position de transport (figure 16), se déplace vers l'avant, relativement au support (17), dans le sens de la marche (F), par rapport à la position qu'il a en position de travail (figure 15) ; étant précisé que de préférence le point de liaison est disposé relié à l'articulation (65) d'un dispositif à leviers à genouillère (62, 63) dont un levier (62) est articulé au support (17) et dont l'autre levier (63) est articulé à la tringle supérieure (16) en un point qui, en position de travail (figure 15) est décalé vers l'arrière par rapport à l'articulation, côté support, de l'un des leviers (62) (figures 15, 16).

11. Combinaison d'appareils selon l'une des revendications 1 à 10, caractérisée en ce qu'en avant du châssis de type portique (5), pour le prolonger, on peut raccorder un châssis intercalaire (54) avec points d'attache pour l'attelage trois points (7) ; et en ce qu'au châssis intercalaire (54) ou au châssis du type portique (5), dans la région des points d'attache de ce châssis (5) prévus pour les bielles inférieures (7') de l'attelage de raccordement ou attelage trois points (7), on peut fixer une poutre transversale (55) qui convient pour installer des outils du type cultivateur (56), par exemple des outils à socs en forme de patte d'oie et/ou pour installer de préférence des roues de soutien (60) réglables en hauteur.

12. Combinaison d'appareils selon l'une des revendications 1 à 11, caractérisée en ce que, juste derrière, en vue de dessus, de préférence immédiatement derrière les points d'attache (80) du châssis du type portique (5) pour l'attelage de raccordement ou attelage trois points (7) pour couplage au tracteur ou au véhicule remorqueur est disposé un appareil de travail du sol entraîné par la prise de force — de préférence comportant un rotor à dents (1) qui tourne dans le sens qui facilite l'avancement (F) de l'appareil : et qu'immédiatement en avant de l'appareil de travail du sol (1) entraîné par la prise de force, au voisinage des points d'attache latéraux inférieurs (80) du châssis du type portique (5) et/ou décalés par rapport aux faces extérieures de l'appareil, des socs (81) qui écroûtent le sol sensiblement horizontalement sont disposés de façon que la terre enlevée par écroûtage parvienne, dans l'état encore soulevé, aux outils de l'appareil (1) entraîné par la prise de force.

13. Combinaison d'appareils selon la revendication 12, caractérisée en ce que des fixations ou des récepteurs (102) pour les socs (81) sont disposés sur le châssis du type portique (5), au voisinage des points d'attache latéraux inférieurs (80) et/ou latéralement à l'extérieur du châssis du type portique (5) sur les éléments de châssis avant de l'appareil de travail du sol (1) entraîné par la prise de force et/ou sur les consoles latérales (75) du châssis du type portique (5), étant précisé que les consoles (75), éventuellement reliées à leurs extrémités extérieures aux éléments de châssis de l'appareil de travail du sol (1) entraîné par la prise de force, laissent ouvert, entre leurs extrémités tournées l'une vers l'autre et reliées au châssis du type portique (5), pour le passage de la prise de force (76), un espace libre correspondant à peu près en vue avant à la section du châssis du type portique (5).

14. Combinaison d'appareils comportant un rotor à dents (1) qui tourne dans le sens qui facilite l'avancement de l'appareil et dont les dents, de préférence pointues à leurs extrémités extérieures, possèdent des arêtes à choc dirigées de préférence dans le sens de rotation, présentant un profil sensiblement rectiligne en forme de coin et disposées, en vue axiale du rotor à dents (1), par rapport au sens de rotation, derrière l'axe du rotor à dents, selon l'une des revendications 1 à 13, caractérisée en ce que les dents ($Z_1$ à $Z_{12}$) sont disposées, chacune pour soi, dans son propre plan radial du rotor à dents (1), avec les mêmes écartements dans le sens de l'axe et en groupes ($B_1$ à $B_6$), étant précisé que chaque groupe comprend douze dents ($Z_1$ à $Z_{12}$) disposées dans douze plans radiaux et que le premier, troisième, etc., groupe ($B_1$, $B_3$, $B_5$...) sont décalés, par rapport au second, quatrième, etc., groupe ($B_2$, $B_4$...) d'un angle d'environ 15° dans le sens de rotation du rotor à dents (1) ; et en ce que respectivement la première, la troisième, etc., jusqu'à la onzième dent ($Z_1$, $Z_3$, ..., $Z_{11}$) d'un groupe, vu dans le sens de l'axe du rotor à dents (1), est décalée, de 180°, par rapport à la seconde, à la quatrième, etc., jusqu'à la douzième dent ($Z_2$, $Z_4$, ..... $Z_{12}$), de ce groupe, qui la suit respectivement, vu dans le sens de l'axe ; et en ce que la troisième dent ($Z_3$) est décalée de 60°, la cinquième dent ($Z_5$), de 330°, la septième dent ($Z_7$), de 270°, la neuvième dent ($Z_9$), de 210° et la onzième dent ($Z_{11}$), de 300°, par rapport à la première dent ($Z_1$) (figures 21, 22).

15. Combinaison d'appareils comportant des fixations pour recevoir le mât support (103) d'un outil de travail du sol (203, 208) servant à retourner, à ameublir et/ou à scarifier ou analogue, par exemple d'un soc du type cultivateur ou du type à patte d'oie, comportant un récepteur (102) disposé sur une partie du châssis, sur une partie fixe par rapport au châssis ou analogue — par exemple sur le châssis du type portique (5) ou sur les consoles (75) — enserrant le mât support (103) avec possibilité de coulissement en direction verticale, comportant également un organe de bridage (104) qui y est disposé, pour bloquer le mât support (103) et comportant également un organe de réglage (107, 113) pour le réglage en hauteur du mât support (103) lorsque l'organe de bridage (104) est desserré, selon l'une des revendications 1 à 14, caractérisée en ce que l'organe de réglage (107, 113), disposé entre une butée fixe par rapport au châssis (112, 116) et une butée (108, 114), côté mât support, mobile en même temps que le mât support (103), présente, du côté du mât support, une butée (108, 114) qui est disposée, de façon amovible, sur le mât support (103) au moyen d'une liaison par fiche (109, 114) dans un trou ou plusieurs trous (110) et qui, de préférence, est disposée au-dessus du récepteur (102) de façon que le mât support (103) soit soulevé lorsque l'on agrandit l'écartement des butées (108, 112, 114, 116).

16. Combinaison d'appareils selon la revendication 15, caractérisée en ce qu'une tige de réglage (107), prévue comme organe de réglage, est maintenue dans un bloc fileté (108) que l'on peut relier au mât support (103) au moyen d'une broche (109) disposée sur lui, et que l'on peut enfiler dans le trou ou la série de trous (110) prévus sur le mât support (103) ; et en ce que l'extrémité de la tige de réglage (107) qui sort du bloc fileté (108) est maintenue dans un logement, en forme de crapaudine, (112), de la butée fixe par rapport au châssis.

17. Combinaison d'appareils selon l'une des revendications 15 et 16, caractérisée en ce qu'un ensemble télescopique (113), prévu comme organe de réglage et manœuvrable pneumatiquement ou — de préférence — hydrauliquement, peut être relié au mât support (103) au moyen d'une broche (114) disposée sur lui et que l'on peut enfiler dans le trou ou la série de trous (110) prévus sur le mât support (103) ; et en ce que l'extrémité, côté opposé à la broche (114), de l'ensemble télescopique (113) peut être reliée, de façon amovible en traction et en poussée, au châssis ou à la pièce fixe par rapport au châssis, étant précisé qu'elle peut s'enfiler, de préférence par une zone (118) de plus faible section, à laquelle se raccordent des parties (119, 120) de plus grande section, dans un logement (117), fixe par rapport au châssis et en forme de fente ouverte à une extrémité.

18. Combinaison d'appareils selon l'une des revendications 15 à 17, caractérisée en ce que, dans le cas des mâts supports (103) qui sont disposés derrière les roues du tracteur ou du véhicule remorqueur, les tiges ou les ensembles télescopiques prévus comme organes de réglage sont disposés derrière les mâts supports (103), dans le sens de la marche.

19. Combinaison d'appareils selon l'une des revendications 15 à 18, caractérisée en ce que l'organe de bridage pour bloquer le mât support (103) est manœuvrable pneumatiquement ou — de préférence — hydrauliquement.

20. Combinaison d'appareils comportant de préférence des socs disposés de préférence devant un rotor à dents (1), avec un mât support (103), disposé essentiellement verticalement et que l'on peut rapporter — de préférence avec possibilité de réglage en hauteur — sur une partie du châssis (5) ou sur une pièce fixe par rapport au châssis (75), comprenant un soc sous-soleur (203), disposé à l'extrémité inférieure du mât support (103) sous un angle de réglage incliné vers le bas et vers l'avant dans la direction de la marche, et comprenant aussi des raclettes écroûteuses (208) larges, disposées des deux côtés du soc sous-soleur, se raccordant à peu près en formant un V — vu par dessus — et avec un angle de réglage semblable, selon l'une des revendications 1 à 19, caractérisée en ce que les raclettes écroûteuses (208) sont disposées, de façon amovible et avec possibilité de réglage en hauteur —

dans les cas particuliers également en double ou en multiple l'une au-dessus de l'autre — sur le mât support (103), de préférence au moyen d'un manchon (206) qui est guidé avec possibilité de coulissement sur le mât support.(103) et qui peut se brider sur le mât support (103) au moyen de vis de bridage (207), qui sont disposées sur une zone du manchon (206) dirigée à l'opposé du sens de marche (F), dans un ou plusieurs trous filetés ou douilles filetées qui y sont rapportées.

21. Combinaison d'appareils selon la revendication 20, caractérisée en ce qu'entre le mât support (103) et une pièce de protection (204) qui est verticale, qui a la forme d'un couteau — vu dans le sens de la marche —, qui est disposée sur la face supérieure du soc sous-soleur (203) devant le mât support (103) et qui, de préférence, est disposée avec son arête avant dirigée obliquement vers l'avant et vers le bas dans le sens de la marche, se trouve un espace libre (205), ouvert vers le haut, pour la pointe formée par les raclettes écroûteuses (208) disposées en forme de V, étant précisé que l'espace libre (205) peut s'étendre jusqu'à la face supérieure du soc sous-soleur (203) ou bien peut se terminer à une certaine distance au-dessus de ce soc sous-soleur (103), si la pièce de protection (204) est fixée, en particulier soudée, aussi bien sur la face supérieure du soc sous-soleur (203) que sur une zone du mât support (103) qui se raccorde au soc sous-soleur (203).

22. Combinaison d'appareils selon l'une des revendications 20 et 21, caractérisée en ce que sur les arêtes, dirigées vers l'arrière des raclettes écroûteuses (208), sont disposés des prolongements (210) en forme de bande ou de tige dirigés parallèlement à la direction de marche (F), vu pardessus.

23. Combinaison d'appareils selon l'une des revendications 20 à 22, caractérisée en ce que dans le cas des outils qui travaillent dans la zone d'une ornière du tracteur ou analogue, le soc sous-soleur correspondant (203) est réglé plus profond que les socs sous-soleurs des outils qui travaillent sur le côté de l'ornière du tracteur ou analogue ; et en ce que la raclette écroûteuse correspondante (208) travaille à la même hauteur que les raclettes écroûteuses des autres outils qui sont sur le côté de l'ornière du tracteur ou analogue.

24. Combinaison d'appareils selon l'une des revendications 1 à 23, caractérisée en ce que le rotor à dents (1) ou une herse rotative, en tant qu'appareil entraîné par la prise de force, sont disposés, fixes par rapport au châssis, sur le châssis du type portique (5) ; et que les autres appareils sont disposés ou accouplés avec possibilité de réglage en hauteur.

25. Combinaison d'appareils selon l'une des revendications 1 à 24, caractérisée en ce que, sous un carter de mécanisme (90), disposé sur le côté du rotor à dents (1) et prévu pour transmettre l'entraînement du rotor à dents (1), est disposée obliquement par rapport à la direction de marche (F), une tige (91), présentant de préférence un profil rond, cintrée vers le haut et vers l'avant en forme de patin et avec une partie avant qui dirigée vers l'extérieur de l'appareil et dont la portion dirigée vers l'avant est disposée éloignée du carter du mécanisme (90), avec formation d'un espace libre ouvert (92).

26. Combinaison d'appareils comportant un châssis (5) qui est du type portique, qui porte à l'avant un appareil de traitement du sol, que l'on peut accoupler, de préférence au moyen d'un attelage trois points (7) à un tracteur ou un véhicule remorqueur et auquel est articulé, avec possibilité de pivotement autour d'un axe transversal, un châssis porteur (12), pour un autre appareil, par exemple un rouleau émotteur (2), que l'on peut régler à différentes positions en hauteur, de façon fixe ou souple, au moyen d'un support réglable (300) entre le châssis porteur (12) et le châssis du type portique (5), selon l'une des revendications 1 à 25, caractérisée en ce que, comme support réglable, est prévu un levier à genouillère (300) qui est sollicité, par la force d'un ressort ou — de préférence — par la force de gravité, dans la direction d'une position de dépassement de point mort, en extension relative, position dans laquelle les charges de compression peuvent être reprises, et dont l'un des leviers est réalisé sous forme de pièce réglable en longueur, par exemple sous forme d'une tige (301) ou d'un ensemble télescopique (302) (figure 17).

27. Combinaison d'appareils comportant un châssis (5) qui est du type portique, qui porte à l'avant un appareil de traitement du sol, que l'on peut accoupler, de préférence au moyen d'un attelage trois points (7) à un tracteur ou un véhicule remorqueur et auquel est articulé, avec possibilité de pivotement autour d'un axe transversal, un châssis porteur (12), pour un autre appareil, par exemple un rouleau émotteur (2), que l'on peut régler à différentes positions en hauteur, de façon fixe et souple, au moyen d'un support réglable (300) entre le châssis porteur (12) et le châssis du type portique (5), selon l'une des revendications 1 à 25, caractérisée en ce que, comme support réglable, est prévu un ensemble télescopique (302) sur l'une des parties duquel (302″) est disposée une butée réglable (312) pour limiter la course maximale d'insertion des deux pièces (302′, 302″) de l'ensemble télescopique (302) et dont les parties (302′, 302″) sont mobiles l'une par rapport à l'autre, avec possibilité d'être verrouillées l'une à l'autre (verrou 311) ou d'effectuer une course limitée en insertion et en extension (fente 313, téton 314).

FIG.1

FIG.2

FIG. 3

0 093 193

FIG.4

FIG.5

FIG.6

0 093 193

FIG. 7

FIG. 8

FIG.9

FIG.10

0 093 193

FIG. 11

0 093 193

FIG.12

0 093 193

FIG. 13

0 093 193

FIG. 14

0 093 193

FIG.15

FIG.16

F

0 093 193

FIG. 17

**FIG. 18**

FIG. 19

FIG. 20

0 093 193

FIG. 21

Fig. 22

FIG. 24

FIG. 23

FIG. 25

FIG. 26

FIG. 27

FIG. 28

FIG. 29

FIG. 30

F

0 093 193